# EUROPÄISCHE PATENTSCHRIFT

(11) **EP 2 689 649 B1**
(45) Veröffentlichungstag und Bekanntmachung des Hinweises auf die Patenterteilung: **21.03.2018**
(21) Anmeldenummer: 13003317.8
(22) Anmeldetag: 29.06.2013
(51) Int. Cl.: A01C 21/00, A01C 17/00

(54) **Verfahren zur gleichmäßigen Verteilung von Streugut im Übergangsbereich zwischen den Feldfahrgassen und der Grenzfahrgasse eines Feldes sowie Zweischeibenstreuer zur Durchführung eines solchen Verfahrens**
Method for uniform distribution of granular material in the transition region between field tramlines and the tramline border of a field, as well as twin disc spreader for performing such a method
Procédé pour la distribution uniforme du matériau dans une région de transition entre les voies de passage sur le terrain et la bordure des voies de passage d'un champ, ainsi que épandeur à deux disques pour réaliser un tel procédé

(30) Priorität: 26.07.2012 DE 102012014753; 22.08.2012 DE 102012016574
(43) Veröffentlichungstag der Anmeldung: 29.01.2014
(73) Patentinhaber: RAUCH Landmaschinenfabrik GmbH, 76547 Sinzheim (DE)
(72) Erfinder: Rauch, Norbert, Dr., 76547 Sinzheim (DE); Stöcklin, Volker, M. Sc., 77975 Ringsheim (DE); Thullner, Christian, 73333 Gingen/Fils (DE)
(74) Vertreter: Lichti - Patentanwälte Partnerschaft mbB

(56) Entgegenhaltungen:
- EP-A1- 0 726 024
- EP-A1- 1 504 645
- EP-A1- 1 695 606
- EP-A1- 2 198 683

## Beschreibung

Die Erfindung betrifft ein Verfahren zur gleichmäßigen Verteilung von Streugut mittels eines Zweischeibenstreuers, welcher zwei derart gegenläufig rotierbare Verteilerscheiben aufweist, dass - in Fahrtrichtung betrachtet - die rechte Verteilerscheibe entgegen und die linke Verteilerscheibe im Uhrzeigersinn rotiert, und bei welchem die Streucharakteristik der beiden Verteilerscheiben sowie jeweils ein, einer jeweiligen Verteilerscheibe zugeordnetes Dosierorgan getrennt voneinander steuerbar sind, zwischen der beim Durchfahren von Feldfahrgassen durch Überlappung der Streufächer erzielten gleichmäßigen Streugutverteilung im Feldinnern und der beim Durchfahren wenigstens einer nahe der Feldgrenze gelegenen Grenzfahrgasse erzielten Streugutverteilung, wobei im Übergangsbereich zwischen den Feldfahrgassen und der Grenzfahrgasse Maßnahmen vorgenommen werden, um die Regelbetriebseinstellungen des Zweischeibenstreuers hinsichtlich Dosiermenge und/oder Aufgabepunkt und/oder Drehzahl einer jeweiligen Verteilerscheiben zu verändern. Die Erfindung bezieht sich ferner auf einen zur Durchführung eines solchen Verfahrens geeigneten Zweischeibenstreuer mit zwei derart gegenläufig rotierbaren Verteilerscheiben, dass - in Fahrtrichtung betrachtet - die rechte Verteilerscheibe entgegen und die linke Verteilerscheibe im Uhrzeigersinn rotiert, und mit jeweils einem, einer jeweiligen Verteilerscheibe zugeordneten Dosierorgan, wobei die Streucharakteristik der beiden Verteilerscheiben sowie jeweils ein, einer jeweiligen Verteilerscheibe zugeordnetes Dosierorgan mittels einer Steuereinrichtung getrennt voneinander steuerbar sind.

Zweischeibenstreuer der vorgenannten Art, wie sie vornehmlich zur möglichst gleichmäßigen Verteilung von Streugut auf landwirtschaftlich zu bearbeitenden Feldern zum Einsatz gelangen, weisen zwei mittels eines Antriebs gegenläufig in Rotation versetzbare, üblicherweise mit Streuschaufeln ausgestattete Verteilerscheiben auf, wobei die - in Fahrtrichtung betrachtet - rechte Verteilerscheibe entgegen dem Uhrzeigersinn und die - wiederum in Fahrtrichtung betrachtet - linke Verteilerscheibe im Uhrzeigersinn rotiert (d.h. die beiden gegenläufig rotierenden Verteilerscheiben drehen sich in der Mitte von innen nach außen entgegen der Fahrtrichtung des Streuers). Den beiden Verteilerscheiben ist je ein steuerbares Dosierorgan zugeordnet, um den auf die jeweilige Verteilerscheibe auftreffenden und von dieser zu verteilenden Volumenstrom an Streugut individuell bzw. getrennt voneinander steuern zu können.

Beim Streuen fährt der Landwirt mit einem derartigen Zweischeibenstreuer üblicherweise entlang einer sich im Bereich des Feldrandes erstreckenden Grenzfahrgasse, um den Randbereich des Feldes zu bestreuen. Hierbei werden üblicherweise spezielle Grenzstreuparameter eingestellt, um dem Umstand Rechnung zu tragen, dass im Bereich des Feldrandes ein Anschlussfahren nicht möglich ist und folglich eine Überlappung von zwei Streubildern nicht mehr stattfinden kann (EP 0 410 312 A1, DE 198 56 926 A1, DE 199 29 356 A1). In jüngerer Zeit kann die Fahrt entlang des Feldrandes ferner dazu genutzt werden, die Feldform mittels eines Navigationssystems des Streuers oder dessen Zugmaschine über GPS zu ermitteln und in eine elektronische Landkarte einzugeben. Anschließend durchfährt der Landwirt mit dem Zweischeibenstreuer das Feldinnere entlang parallel angelegter Feldfahrgassen, welche einen derartigen Abstand voneinander besitzen, dass es durch Überlappung der beim Befahren jeweils benachbarter Feldfahrgassen erzielter Streufächer zu einer gleichmäßigen Streugutverteilung kommt, welche sowohl aus wirtschaftlichen als auch aus ökologischen Gründen stets erwünscht ist. Als problematisch in Bezug auf eine homogene Streugutverteilung erweist sich indes insbesondere der Übergangsbereich zwischen der Grenzfahrgasse und den Enden der Feldfahrgassen, d.h. im sogenannten Vorgewende, wenn der Landwirt von einer jeweiligen Feldfahrgasse in die Grenzfahrgasse hinein und von dieser wieder in die nächste Feldfahrgasse hinaus fährt. Dies gilt in besonderem Maße dann, wenn die Feldfahrgassen unter einem Winkel ungleich 90° in Bezug auf die Grenzfahrgasse angeordnet sind, wie es sehr häufig der Fall ist.

In diesem Zusammenhang beschreibt beispielsweise die EP 2 319 285 A2 ein Verfahren zum gleichmäßigen Verteilen von Mineraldünger zwischen den auf einem Feld angelegten Fahrgassen und dem sogenannten Vorgewende, d.h. dem durch Durchfahren der Grenzfahrgassen bestreuten, randseitigen Feldbereich, mittels eines derartigen Zweischeibenstreuers. Hierbei wird in dem Feld durch Anschlussfahrten in parallelen Fahrgassen die üblicherweise etwa halbkreis- bzw. fächerförmige Düngerverteilung mit derjenigen der benachbarten Fahrgasse überlappt und wird in der Überlappungszone zwischen der Düngerverteilung im Feld und der im Vorgewende die Düngerablage GPS-gesteuert bei der Fahrt aus dem Feld in das Vorgewende unterbrochen und bei der Fahrt aus dem Vorgewende in das Feld wieder eingeschaltet. Die Aus- bzw. Einschaltpunkte werden anhand verschiedener Streuparameter, wie insbesondere Düngersorte, Streuscheibentyp, Drehzahl der Verteilerscheiben und Arbeitsbreite, sowie anhand der Geometrie und des Fahrwegs des Zweischeibenstreuers bzw. der diesen tragenden Zugmaschine rechnerisch ermittelt.

Die EP 2 417 848 A2 beschreibt ein Verfahren zur optimierten Verteilung von Mineraldünger mittels eines Zweischeibenstreuers zwischen der beim Durchfahren von auf einem Feld angelegten Fahrgassen durch Überlappung der Streufächer der Verteilerscheiben erzielten gleichmäßigen Düngerverteilung im Feldinneren und der Düngerverteilung im Vorgewende, indem für den Übergang des Zweischeibenstreuers vom Feldinneren in das Vorgewende bzw. von letzterem in das Feldinnere rechnerisch Übergangspunkte bestimmt werden, an welchen die für das Feldinnere vorgesehenen Standardeinstellungen des Zweischeibenstreuers (insbesondere hinsichtlich der Streuparameter Dosiermenge, Aufgabepunkt und Drehzahl der Verteilerscheiben) individuell verändert werden, wobei diese Übergangspunkte in Abhängigkeit von der Arbeitsbreite im Feldinneren und einem versuchstechnisch ermittelten Kennwert für die Flugeigenschaften des jeweiligen Streugutes ermittelt werden. Um auch im Falle von schräg auf das Vorgewende zulaufenden Fahrgassen in deren Grenzbereichen für eine möglichst homogene Düngerverteilung zu sorgen, sieht das Verfahren im Falle einer solchen Zufahrt des Zweischeibenstreuers auf das Vorgewende vor, entweder die Dosiermenge der dem Vorgewende zugewandten Zweischeibenstreuerseite und/oder die Drehzahl bzw. den Aufgabepunkt einseitig zu verändern, wobei die genannten Parameter auch beidseitig verändert werden können, um das von dem Scheibenpaar erzeugte Streubild von dem Vorgewende fort in Richtung des Feldinneren zu verlagern.

In der EP 2 436 253 A1 geht es um ein weiteres Verfahren zur gleichmäßigen Verteilung von Dünger mittels eines Zweischeibenstreuers in Feldbereichen, bei deren landwirtschaftlichen Bearbeitung der Streuer Kurven durchfahren muss, wie beispielsweise auch während des Wendens an den äußeren Feldgrenzen. Hierzu ist vorgesehen, dass während des Durchfahrens solcher Kurven gegenüber dem Regelbetrieb auf gerader Fahrstrecke kurveninnenseitig sowie kurvenaußenseitig ungleiche Dosiermengen, unterschiedliche Aufgabepunkte und/oder unterschiedliche Drehzahlen der Verteilerscheiben eingestellt werden, um kurveninnenseitige Über- bzw. kurvenaußenseitige Unterdosierungen des Düngers zu kompensieren. Allerdings vermag eine solche Vorgehensweise einer ungleichmäßigen Düngerverteilung bei der Fahrt auf eine in Bezug auf die Feldfahrgasse(n) schräg angeordnete Grenzfahrgasse zu bzw. von dieser fort, bei welcher sich der Streuer noch bzw. schon (wieder) auf einer der in aller Regel geradlinigen Feldfahrgassen befindet, nicht zu begegnen.

Die EP 1 692 929 A1 beschreibt ein Verfahren zum GPS-gestützten Steuern oder Regeln eines Zweischeibenstreuers bei der Einfahrt in das Vorgewende aus dem Feld bzw. bei der Einfahrt in das Feld aus dem Vorgewende. Dabei wird in dem Speicher eines Bordcomputers eine virtuelle Begrenzungslinie zwischen dem Vorgewende und dem Feldinnern hinterlegt und werden Ein- und Ausschaltpunkte der Dosierorgane als Abstand von der Begrenzungslinie definiert, wobei die Dosierorgane GPS-gesteuert aus- bzw. eingeschaltet werden, sobald der Streuer einen solchen Abstand von der Begrenzungslinie erreicht hat. Je nach in der Druckschrift nicht näher definierter Kontur der elektronisch hinterlegten Begrenzungslinie zwischen dem Vorgewende und dem Feldinneren können die Dosierorgane gleichzeitig oder nacheinander entsprechend gesteuert werden. Hierbei kommt es auf der Seite des verfrüht abgeschalteten Dosierorgans zu Unterdüngungen.

Der EP 2 198 683 A1 ist schließlich ein Verfahren zur gleichmäßigen Verteilung von Streugut mittels eines Zweischeibenstreuers zu entnehmen, wobei zur Steuerung dessen Dosierorgane und der Aufgabepunkte des Streugutes auf dessen Verteilerscheiben eine Konvertierung von Feldspritzensignalen in Steuerbefehle für einen Düngerstreuer vorgesehen ist. Für die Betriebsweise des Zweischeibenstreuers während der Fahrt auf einen in Bezug auf die Feldfahrgassen schrägen Feldrand zu bzw. von diesem fort wird vorgeschlagen, dass das aus den beiden Streufächern der beiden Verteilerscheiben resultierende, im Wesentlichen sichelförmige Streubild sukzessive von dem Feldrand fort bzw. auf diesen zu gedreht wird, indem der den jeweiligen Verteilerscheiben aufgegebene Massenstrom an Streugut sukzessive verringert bzw. erhöht und der Aufgabepunkt auf die jeweilige Verteilerscheiben sukzessive vom Feldrand dort bzw. auf diesen zu verlagert wird.

Der Erfindung liegt die Aufgabe zugrunde, die Homogenität der Streugutverteilung eines gattungsgemäßen Zweischeibenstreuers während seiner Fahrt von einer jeweiligen Feldfahrgasse auf eine in Bezug auf diese schräg angeordnete Grenzfahrgasse zu bzw. auf einer jeweiligen, in Bezug auf die Grenzfahrgasse schräg angeordnete Feldfahrgasse von der Grenzfahrgasse fort weiter zu optimieren, um für eine stets gleichmäßige Verteilung des Streugutes auf dem Boden zu sorgen.

Was die Zufahrt eines gattungsgemäßen Zweischeibenstreuers von einer jeweiligen Feldfahrgasse auf eine unter einem Winkel größer 0° und kleiner 90° in Bezug auf diese Feldfahrgasse angeordnete Grenzfahrgasse zu betrifft, wird diese Aufgabe erfindungsgemäß bei einem Verfahren der eingangs genannten Art dadurch gelöst, dass ab Erreichen eines minimalen, in Bezug auf die jeweilige Feldfahrgasse seitlichen Abstandes der der Grenzfahrgasse zugewandten Verteilerscheibe des Zweischeibenstreuers von der Grenzfahrgasse das Dosierorgan der der Grenzfahrgasse zugewandten Verteilerscheibe abgeschaltet wird, während
(a) die Dosiermenge des Dosierorgans der der Grenzfahrgasse abgewandten Verteilerscheibe erhöht wird; und/oder
(b) das Streubild der der Grenzfahrgasse abgewandten Verteilerscheibe durch wenigstens eine Maßnahme aus der folgenden Gruppe verändert wird:
   - Verändern des Aufgabepunktes des Streugutes auf die der Grenzfahrgasse abgewandte Verteilerscheibe gegen die Drehrichtung dieser Verteilerscheibe, so dass deren Streubild in Richtung der der Grenzfahrgasse (3e) zugewandten Verteilerscheibe, deren Dosierorgan geschlossen worden ist, verlagert wird;
   - Verändern des Aufgabepunktes des Streugutes auf die der Grenzfahrgasse abgewandte Verteilerscheibe nach außen in Richtung deren Scheibenumfangs, so dass deren Schwerpunkt der Verteilung näher an den zentralen Bereich des Zweischeibenstreuers herangerückt wird; und
   - Erhöhen der Drehzahl der der Grenzfahrgasse abgewandten Verteilerscheibe, so dass deren Streubild insgesamt vergrößert wird, um die der Grenzfahrgasse (3e) zugewandte Seite der anderen Verteilerscheibe, deren Dosierorgan geschlossen worden ist, in einem höheren Maße zu überlappen; so dass die der Grenzfahrgasse abgewandte Verteilerscheibe die Streugutverteilung auf der der Grenzfahrgasse zugewandten Seite des Zweischeibenstreuers übernimmt, insbesondere so lange der minimale Seitenabstand nicht wieder übertroffen wird.

Was die Fortfahrt eines gattungsgemäßen Zweischeibenstreuers auf einer jeweiligen Feldfahrgasse von der unter einem Winkel größer 0° und kleiner 90° in Bezug auf diese Feldfahrgasse angeordneten Grenzfahrgasse (3e) fort betrifft, wird diese Aufgabe erfindungsgemäß bei einem Verfahren der eingangs genannten Art dementsprechend dadurch gelöst, dass bis zum Erreichen eines minimalen, in Bezug auf die jeweilige Feldfahrgasse seitlichen Abstandes der der Grenzfahrgasse zugewandten Verteilerscheibe des Zweischeibenstreuers von der Grenzfahrgasse das Dosierorgan der der Grenzfahrgasse zugewandten Verteilerscheibe abgeschaltet wird, während
(a) die Dosiermenge des Dosierorgans der der Grenzfahrgasse abgewandten Verteilerscheibe erhöht wird; und/oder
(b) das Streubild der der Grenzfahrgasse abgewandten Verteilerscheibe durch wenigstens eine Maßnahme aus der folgenden Gruppe verändert wird:
   - Verändern des Aufgabepunktes des Streugutes auf die der Grenzfahrgasse abgewandte Verteilerscheibe gegen
      die Drehrichtung dieser Verteilerscheibe, so dass deren Streubild in Richtung der der Grenzfahrgasse (3e) zugewandten Verteilerscheibe, deren Dosierorgan geschlossen worden ist, verlagert wird;
   - Verändern des Aufgabepunktes des Streugutes auf die der Grenzfahrgasse abgewandte Verteilerscheibe nach außen in Richtung deren Scheibenumfangs, so dass deren Schwerpunkt der Verteilung näher an den zentralen Bereich des Zweischeibenstreuers herangerückt wird; und
   - Erhöhen der Drehzahl der der Grenzfahrgasse abgewandten Verteilerscheibe, so dass deren Streubild insgesamt vergrößert wird, um die der Grenzfahrgasse (3e) zugewandte Seite der anderen Verteilerscheibe, deren Dosierorgan geschlossen worden ist, in einem höheren Maße zu überlappen; so dass die der Grenzfahrgasse abgewandte Verteilerscheibe die Streugutverteilung auf der der Grenzfahrgasse zugewandten Seite des Zweischeibenstreuers übernimmt, insbesondere bis der minimale Seitenabstand wieder übertroffen wird. Erfindungsgemäß wurde erkannt, dass im Falle der Zufahrt des Zweischeibenstreuers von einer Feldfahrgasse auf die Grenzfahrgasse zu bzw. im Falle der Fortfahrt auf einer Feldfahrgasse von der Grenzfahrgasse fort im Übergangsbereich von Grenz- und Feldfahrgassen bei Unterschreiten eines gewissen seitlichen Mindestabstandes des auf einer jeweiligen Feldfahrgasse fahrenden Zweischeibenstreuers von der Grenzfahrgasse, welche im Rahmen der vorliegenden Offenbarung als "minimaler Seitenabstand des Zweischeibenstreuers von der Grenzfahrgasse" bezeichnet ist, das Streubild der der Grenzfahrgasse zugewandten Verteilerscheibe durch entsprechende Modifikation ihrer Dosiermenge, ihrer Drehzahl und/oder ihres Aufgabepunktes, wie es die oben zitierte EP 2 417 848 A2 vorsieht, nicht mehr in einem Maße verändert werden kann, um für eine fortwährend gleichmäßige Streugutverteilung auf der der Grenzfahrgasse zugewandten Seite des Streuers zu sorgen und dabei insbesondere diejenigen Feldbereiche, welche noch einen Streugutbedarf aufweisen (durch Überlappung mit dem anlässlich des anfänglichen Durchfahrens der Grenzfahrgasse am Feldrand aufgebrachten Streugutverteilung), mit Streugut zu versorgen, ohne auf diejenigen Feldbereiche, welche praktisch keinen oder einen nur noch geringen Streugutbedarf aufweisen, mit einer übermäßigen Streugutverteilung zu versehen.

Die Erfindung begegnet diesem Problem dadurch, dass einerseits
- bei der Zufahrt von einer jeweiligen Feldfahrgasse auf eine unter einem Winkel größer 0° und kleiner 90° in Bezug auf diese Feldfahrgasse angeordnete Grenzfahrgasse zu,
   andererseits
- bei der Fortfahrt auf einer jeweiligen Feldfahrgasse von der unter einem Winkel größer 0° und kleiner 90° in Bezug auf diese Feldfahrgasse angeordneten Grenzfahrgasse fort,
   das Dosierorgan der der Grenzfahrgasse zugewandten Verteilerscheibe gänzlich abgeschaltet wird, so dass die der Grenzfahrgasse zugewandte Verteilerscheibe kein Streugut mehr abwirft. Der minimale Seitenabstand, welcher im Falle der Zufahrt auf die Grenzfahrgasse zu bzw. im Falle der Fortfahrt von der Grenzfahrgasse fort aufgrund der unterschiedlichen Verhältnisse der vom hinteren Ende des Zweischeibenstreuers gegebenenfalls unter einem gewissen Abstand abgeworfenen Streufächer nicht notwendigerweise derselbe sein muss, kann hierbei beispielsweise in Abhängigkeit der eingestellten Arbeitsbreite und/oder insbesondere in Abhängigkeit eines z.B. versuchstechnisch ermittelbaren Kennwertes der Flugeigenschaften des jeweils ausgebrachten Streugutes bestimmt werden, wobei entsprechende Kennlinien der Flugeigenschaften verschiedener Streugüter in der Steuerung des Zweischeibenstreuers hinterlegt werden können. Um den der Grenzfahrgasse zugewandten Bereich zwischen letzterer und dem Zweischeibenstreuer gleichwohl mit der vorgesehenen Menge an Streugut zu versehen, übernimmt insoweit die der Grenzfahrgasse abgewandte Verteilerscheibe die Streugutverteilung, z.B. so lange bei der Zufahrt auf die Grenzfahrgasse der minimale Seitenabstand bei der Weiterfahrt nicht wieder übertroffen wird bzw. bis dieser minimale Seitenabstand bei der Fortfahrt von der Grenzfahrgasse wieder erreicht worden ist, woraufhin das Dosierorgan der der Grenzfahrgasse zugewandten Verteilerscheibe wieder geöffnet wird. Auf diese Weise wird sichergestellt, dass der Zweischeibenstreuer unter einem praktisch beliebigen Winkel, vorzugsweise jedoch größer als etwa 15°, der Feldfahrgassen in Bezug auf die Grenzfahrgassen das Vorgewende zu passieren vermag und es gleichwohl weder zu einer nennenswerten Beeinträchtigung der Gleichmäßigkeit der Streugutverteilung infolge eines zu geringen Aufbringens von Streugut im Feld, noch zu einem unwirtschaftlichen und zudem ökologisch abträglichen Ausbringen von Streugut dort kommt, wo es die ihm zugedachte Funktion nicht erfüllen kann (z.B. jenseits der Feldgrenze) oder bereits erfüllt hat (z.B. im Bereich des Feldrandes).

Es sei an dieser Stelle darauf hingewiesen, dass als Bezugspunkt im Rahmen der vorliegenden Offenbarung von der der Grenzfahrgasse zugewandten Verteilerscheibe gesprochen wird. Dem Fachmann ist indes offensichtlich, dass ein beliebiger anderer Bezugspunkt des Zweischeibenstreuers oder auch der Zugmaschine bzw. des Traktors für den minimalen Seitenabstand herangezogen werden kann, wobei sich dementsprechend dann ein anderer minimaler Seitenabstand ergeben kann. Sitzt die GPS-Antenne beispielsweise im mittleren Bereich der Zugmaschine, so geht im Falle eines GPS-gesteuerten Verfahrens der Abstand der GPS-Antenne von der jeweiligen Verteilerscheibe (Restlänge der Zugmaschine plus Länge des Zweischeibenstreuers) zusätzlich zu dem jeweiligen Winkel zwischen den Feldfahrgassen und der Grenzfahrgasse in die Bestimmung des minimalen Seitenabstandes ein. In Bezug auf die Ermittlung entsprechender Schaltpunkte sei in diesem Zusammenhang exemplarisch auf die EP 2 319 285 A2 verwiesen.

Während der Zufahrt des Zweischeibenstreuers auf die Grenzfahrgasse zu bzw. während der Fortfahrt desselben von der Grenzfahrgasse fort kann einerseits - solange das Dosierorgan der der Grenzfahrgasse zugewandten Verteilerscheibe aufgrund eines seitlichen Abstandes von der Grenzfahrgasse kleinergleich dem minimalen Seitenabstand abgeschaltet worden ist - das Streubild der der Grenzfahrgasse abgewandten Verteilerscheibe entsprechend verändert werden, um sicherzustellen, dass der im Regelbetrieb von der der Grenzfahrgasse zugewandten, nunmehr nicht aktiven Verteilerscheibe bestreute Bereich mit versorgt wird. Zu diesem Zweck können erfindungsgemäß mehrere Maßnahmen alternativ oder kumulativ getroffen werden, wobei
- der Aufgabepunkt des Streugutes auf die der Grenzfahrgasse abgewandte Verteilerscheibe gegen die Drehrichtung dieser Verteilerscheibe verändert werden kann (d.h. die geometrische Form des Streubildes bleibt im Wesentlichen unverändert, wird aber in Richtung der anderen Verteilerscheibe, deren Dosierorgan geschlossen worden ist, verlagert, indem es um die Rotationsachse der Verteilerscheibe gedreht wird); und/oder
- der Aufgabepunkt des Streugutes auf die der Grenzfahrgasse abgewandte Verteilerscheibe nach außen in Richtung deren Scheibenumfangs verändert werden kann (d.h. der Schwerpunkt der Verteilung rückt näher an den zentralen Bereich des Zweischeibenstreuers heran, weil das Streugut eine kürzere radiale Wegstrecke entlang der Streuschaufeln der Verteilerscheibe passiert, bevor es letztere radial verlässt); und/oder
- die Drehzahl der der Grenzfahrgasse abgewandten Verteilerscheibe erhöht werden kann (d.h. das Streubild und insbesondere die Verteilungsbreite wird insgesamt vergrößert, so dass es die Seite der anderen Verteilerscheibe, deren Dosierorgan geschlossen worden ist, in einem höheren Maße überlappt).

Alternativ oder zusätzlich kann bei der Zufahrt auf die Grenzfahrgasse zu bzw. bei der Fortfahrt von dieser fort ab bzw. bis zum Erreichen des vorherbestimmbaren, minimalen Seitenabstandes von der Grenzfahrgasse die Dosiermenge des Dosierorgans der der Grenzfahrgasse abgewandten Verteilerscheibe erhöht werden. Die Erhöhung der Dosiermenge des Dosierorgans der der Grenzfahrgasse abgewandten Verteilerscheibe erfolgt hierbei insbesondere entsprechend dem Streugutbedarf der zusätzlichen Fläche zwischen dem Zweischeibenstreuer und der Grenzfahrgasse, welche im Regelbetrieb von der der Grenzfahrgasse zugewandten Verteilerscheibe, welche aufgrund Erreichen bzw. Unterschreiten des minimalen Seitenabstandes außer Betrieb gesetzt worden ist, bestreut würde, um den durch diese zusätzliche Fläche verursachten, zusätzlichen Bedarf an Streugut zu kompensieren.

Um für eine möglichst exakte Verteilung des Streugutes zwischen dem Zweischeibenstreuer und der Grenzfahrgasse entsprechend dem jeweiligen Mengenbedarf zu sorgen, kann es insbesondere von Vorteil sein, dass
- während der Zufahrt auf die Grenzfahrgasse zu ab Erreichen des vorherbestimmbaren, minimalen Seitenabstandes der der Grenzfahrgasse zugewandten Verteilerscheibe des Zweischeibenstreuers von der Grenzfahrgasse bzw.
- während der Fortfahrt von der Grenzfahrgasse fort bis zum Erreichen des vorherbestimmbaren, minimalen Seitenabstandes der der Grenzfahrgasse zugewandten Verteilerscheibe des Zweischeibenstreuers von der Grenzfahrgasse
sowohl die Dosiermenge des Dosierorgans der der Grenzfahrgasse abgewandten Verteilerscheibe erhöht als auch deren Streubild verändert wird.

In Bezug auf eine Veränderung des Streubildes der der Grenzfahrgasse abgewandten Verteilerscheibe
- während der Zufahrt auf die Grenzfahrgasse zu ab Erreichen des vorherbestimmbaren, minimalen Seitenabstandes der der Grenzfahrgasse zugewandten Verteilerscheibe des Zweischeibenstreuers von der Grenzfahrgasse
   bzw.
- während der Fortfahrt von der Grenzfahrgasse fort bis zum Erreichen des vorherbestimmbaren, minimalen Seitenabstandes der der Grenzfahrgasse zugewandten Verteilerscheibe des Zweischeibenstreuers von der Grenzfahrgasse
   hat es sich ferner als besonders vorteilhaft erwiesen, wenn zur Veränderung des Streubildes dieser Verteilerscheibe zumindest der Aufgabepunkt des Streugutes auf die der Grenzfahrgasse abgewandte Verteilerscheibe gegen die Drehrichtung dieser Verteilerscheibe und/oder nach außen in Richtung deren Scheibenumfangs verändert wird.

Der minimale Seitenabstand für die Fahrt auf die Grenzfahrgasse zu bzw. von dieser fort kann vorzugsweise in Abhängigkeit wenigstens eines versuchstechnisch ermittelbaren Kennwertes für die Flugeigenschaften des verwendeten Streugutes festgelegt werden, wobei sich der minimale Seitenabstand insbesondere jeweils an einer Stelle ergibt, an welcher der Streufächer der der Grenzfahrgasse zugewandten Verteilerscheibe durch Einstellung von Grenzwerten für den Aufgabepunkt und/oder für die Drehzahl dieser Verteilerscheibe minimiert worden ist und unter Gewährleistung einer gleichmäßigen Streugutverteilung mit der Streugutverteilung der Grenzfahrgasse überlappt. Folglich wird das Dosierorgan der der Grenzfahrgasse zugewandten Verteilerscheibe bevorzugt dann
- bei der Fahrt auf die Grenzfahrgasse zu geschlossen
   bzw.
- bei der Fahrt von der Grenzfahrgasse fort wieder geöffnet,
wenn der so weit wie möglich verkleinerte Streufächer der der Grenzfahrgasse zugewandten Verteilerscheibe bei dem jeweils verwendeten Streugut eine gleichmäßige Streugutverteilung gerade nicht mehr bzw. gerade wieder sicherzustellen vermag.

In der Praxis kann es insbesondere häufig der Fall sein, dass sich der minimale Seitenabstand an einer Stelle ergibt, an welcher sich die Arbeitsbreite des Streufächers der der Grenzfahrgasse zugewandten Verteilerscheibe, welche durch Einstellung von Grenzwerten für den Aufgabepunkt und/oder für die Drehzahl dieser Verteilerscheibe minimiert worden ist, etwa mit der Arbeitsbreite der Streugutverteilung der Grenzfahrgasse schneidet.

Bereits vor Erreichen des minimalen Seitenabstandes während der Zufahrt auf die Grenzfahrgasse zu bzw. unmittelbar nach Erreichen des minimalen Seitenabstandes während der Fortfahrt von der Grenzfahrgasse fort, kann bei der Weiterfahrt vorzugsweise zunächst die Dosiermenge des Dosierorgans der der Grenzfahrgasse zugewandten Verteilerscheibe vermindert werden, wie es als solches aus der eingangs zitierte EP 2 417 848 A2 bekannt ist, wobei die Verminderung der Dosiermenge wiederum zweckmäßig entsprechend dem verminderten Streugutbedarf auf der der Grenzfahrgasse zugewandten Seite des Streuers entspricht, auf welcher die Grenzfahrgasse schräg in die jeweilige Feldfahrgasse einmündet. Alternativ oder zusätzlich kann auch hier das Streubild der der Grenzfahrgasse zugewandten Verteilerscheibe derart verändert werden, um dem verminderten Abstand zwischen dem Zweischeibenstreuer und der Grenzfahrgasse Rechnung zu tragen und das Streubild vorzugsweise entsprechend der nunmehr kleineren zu bestreuenden Fläche zu verändern und insbesondere die Verteilungsbreite der der Grenzfahrgasse zugewandten Verteilerscheibe entsprechend zu verringern. Demgemäß kann gemäß einer vorteilhaften Weiterbildung des erfindungsgemäßen Verfahrens vorgesehen sein, dass während der Fahrt
- von der Feldfahrgasse auf die Grenzfahrgasse zu ab Erreichen eines gegenüber dem minimalen Seitenabstand größeren Seitenabstandes der der Grenzfahrgasse zugewandten Verteilerscheibe des Zweischeibenstreuers von der Grenzfahrgasse
   bzw.
- auf der Feldfahrgasse von der Grenzfahrgasse fort ab Erreichen des minimalen Seitenabstandes und bis zum Erreichen eines gegenüber dem minimalen Seitenabstand größeren Seitenabstandes der der Grenzfahrgasse zugewandten Verteilerscheibe des Zweischeibenstreuers von der Grenzfahrgasse
bei der Weiterfahrt zunächst
(a) die Dosiermenge des Dosierorgans der der Grenzfahrgasse zugewandten Verteilerscheibe vermindert wird; und/oder
(b) das Streubild der der Grenzfahrgasse zugewandten Verteilerscheibe durch wenigstens eine Maßnahme aus der folgenden Gruppe verändert wird:
   - Verändern des Aufgabepunktes des Streugutes auf die der Grenzfahrgasse zugewandte Verteilerscheibe gegen die Drehrichtung dieser Verteilerscheibe (d.h. die geometrische Form des Streubildes bleibt im Wesentlichen unverändert, wird aber in Richtung der anderen Verteilerscheibe bzw. in Richtung des zentralen Bereichs hinter dem Zweischeibenstreuer und von dem der Grenzfahrgasse zugewandten Rand fort verlagert, indem es um die Rotationsachse der Verteilerscheibe gedreht wird);
   - Verändern des Aufgabepunktes des Streugutes auf die der Grenzfahrgasse zugewandte Verteilerscheibe nach außen in Richtung deren Scheibenumfangs (d.h. der Schwerpunkt der Verteilung rückt näher in den zentralen Bereich des Zweischeibenstreuers heran, weil das Streugut eine kürzere radiale Wegstrecke entlang der Streuschaufeln der Verteilerscheibe passiert, bevor es letztere radial verlässt); und
   - Vermindern der Drehzahl der der Grenzfahrgasse zugewandten Verteilerscheibe (d.h. das Streubild und insbesondere die Verteilungsbreite wird insgesamt verringert).

Der gegenüber dem minimalen Seitenabstand größere Seitenabstand der der Grenzfahrgasse zugewandten Verteilerscheibe von der Grenzfahrgasse kann sich vorzugsweise an einer Stelle ergeben, an welcher sich die Arbeitsbreite des Streufächers der der Grenzfahrgasse zugewandten Verteilerscheibe im Regelbetrieb etwa mit der Arbeitsbreite der Streugutverteilung der Grenzfahrgasse schneidet, d.h. sobald aufgrund der Arbeitsbreiten im Regelbetrieb (Grenzfahrgasse/Feldfahrgasse) eine übermäßige Überlappung der Streufächer aufträte, welche bereichsweise in einem übermäßigen Aufbringen von Streugut resultierte, wird die Streugutmenge und/oder das Streubild der der Grenzfahrgasse zugewandten Verteilerscheibe entsprechend verringert.

In diesem Zusammenhang kann es während der Fahrt
- auf die Grenzfahrgasse zu ab Erreichen des gegenüber dem minimalen Seitenabstand größeren Seitenabstandes von der Grenzfahrgasse
   bzw.
- von der Grenzfahrgasse fort ab Erreichen des minimalen Seitenabstandes und bis zum Erreichen des demgegenüber größeren Seitenabstandes von der Grenzfahrgasse
   bei der Weiterfahrt wiederum von Vorteil sein, wenn sowohl die Dosiermenge des Dosierorgans der der Grenzfahrgasse zugewandten Verteilerscheibe vermindert als auch deren Streubild verändert wird.

In Bezug auf die Veränderung des Streubildes der der Grenzfahrgasse zugewandten Verteilerscheibe kann es dabei sowohl im Falle der Fahrt des Zweischeibenstreuers auf die Grenzfahrgasse zu als auch von dieser fort zweckmäßig sein, dass zumindest der Aufgabepunkt des Streugutes auf die der Grenzfahrgasse zugewandte Verteilerscheibe gegen die Drehrichtung dieser Verteilerscheibe und/oder nach außen in Richtung deren Scheibenumfangs verändert wird.

Die der Grenzfahrgasse abgewandte Verteilerscheibe kann
- bei der Zufahrt des Zweischeibenstreuers auf die Grenzfahrgasse zu bis zum Erreichen des minimalen Seitenabstandes
   bzw.
- bei der Fortfahrt des Zweischeibenstreuers von der Grenzfahrgasse fort ab Erreichen des minimalen Seitenabstandes
   (gerade) noch bzw. (gerade) wieder ihren Regelbetrieb verrichten, d.h. ihre Streuparameter können unverändert bleiben, sofern der minimale Seitenabstand des Zweischeibenstreuers von der Grenzfahrgasse überschritten ist. Folglich kann gemäß einer ersten Alternative vorgesehen sein, dass während der Fahrt
- von der Feldfahrgasse auf die Grenzfahrgasse zu
   bzw.
- auf der Feldfahrgasse von der Grenzfahrgasse fort die Dosiermenge des Dosierorgans der der Grenzfahrgasse abgewandten Verteilerscheibe, deren Drehzahl und deren Aufgabepunkt des Streugutes
- unverändert bleibt, so lange der minimale Seitenabstand der der Grenzfahrgasse zugewandten Verteilerscheibe des Zweischeibenstreuers von der Grenzfahrgasse nicht erreicht worden ist;
   bzw.
- gemäß dem Regelbetrieb eingestellt wird, sobald der minimale Seitenabstand der der Grenzfahrgasse zugewandten Verteilerscheibe des Zweischeibenstreuers von der Grenzfahrgasse wieder erreicht worden ist.

Indes kann gemäß einer zweiten Alternative auch vorgesehen sein, dass während der Fahrt
- von der Feldfahrgasse auf die Grenzfahrgasse zu bereits vor Erreichen des minimalen Seitenabstandes der der Grenzfahrgasse zugewandten Verteilerscheibe des Zweischeibenstreuers von der Grenzfahrgasse, insbesondere wenn oder nachdem der Zweischeibenstreuer eine Position erreicht hat, an welcher sich die Arbeitsbreite des Streufächers der der Grenzfahrgasse zugewandten Verteilerscheibe im Regelbetrieb mit der Arbeitsbreite der Streugutverteilung der Grenzfahrgasse etwa schneidet,
   bzw.
- auf der Feldfahrgasse von der Grenzfahrgasse fort nach Erreichen des minimalen Seitenabstandes der der Grenzfahrgasse zugewandten Verteilerscheibe des Zweischeibenstreuers von der Grenzfahrgasse, insbesondere bis oder bevor der Zweischeibenstreuer eine Position erreicht hat, an welcher sich die Arbeitsbreite des Streufächers der der Grenzfahrgasse zugewandten Verteilerscheibe im Regelbetrieb mit der Arbeitsbreite der Streugutverteilung der Grenzfahrgasse etwa schneidet,
   (a) die Dosiermenge des Dosierorgans der der Grenzfahrgasse abgewandten Verteilerscheibe erhöht wird; und/oder
   (b) das Streubild der der Grenzfahrgasse abgewandten Verteilerscheibe durch wenigstens eine Maßnahme aus der folgenden Gruppe verändert wird:
      - Verändern des Aufgabepunktes des Streugutes auf die der Grenzfahrgasse abgewandte Verteilerscheibe gegen die Drehrichtung dieser Verteilerscheibe;
      - Verändern des Aufgabepunktes des Streugutes auf die der Grenzfahrgasse abgewandte Verteilerscheibe nach außen in Richtung deren Scheibenumfangs; und
      - Erhöhen der Drehzahl der der Grenzfahrgasse abgewandten Verteilerscheibe.

Letztere Alternative macht es beispielsweise möglich, dass insbesondere im Falle von größeren Änderungen des Streubildes der der Grenzfahrgasse zugewandten Verteilerscheibe zur Optimierung der Querverteilung insgesamt eine frühere Anpassung des Streubildes der der Grenzfahrgasse abgewandten Verteilerscheibe vorgenommen wird, d.h.
- noch bevor der minimale Seitenabstand bei der Zufahrt auf die Grenzfahrgasse zu erreicht und die der Grenzfahrgasse zugewandte Verteilerscheibe gänzlich abgeschaltet worden ist;
   bzw.
- unmittelbar nachdem der minimale Seitenabstand bei der Fortfahrt von der Grenzfahrgasse erreicht und die der Grenzfahrgasse zugewandte Verteilerscheibe wieder zugeschaltet worden ist.

Wie bereits angedeutet, kann gemäß einer vorteilhaften Ausgestaltung des erfindungsgemäßen Verfahrens vorgesehen sein, dass
- die Veränderung der Dosiermenge des Dosierorgans der jeweiligen Verteilerscheibe; und/oder
- die Veränderung der Drehzahl der jeweiligen Verteilerscheibe; und/oder
- die Veränderung des Aufgabepunktes des Streugutes auf die jeweilige Verteilerscheibe
kontinuierlich in Abhängigkeit der aktuellen Fortbewegungsgeschwindigkeit des Zweischeibenstreuers sowie des aktuellen Seitenabstandes desselben von der Grenzfahrgasse gesteuert wird. Die jeweilige Veränderung der genannten Parameter kann demnach bei der Weiterfahrt des Zweischeibenstreuers kontinuierlich entsprechend dem seitlichen Abstand der Grenzfahrgasse von dem Zweischeibenstreuer - bzw. genauer: in Abhängigkeit von der bei der Fahrt kleiner bzw. größer werdenden, zu bestreuenden Fläche zwischen dem auf einer Feldfahrgasse fahrenden Zweischeibenstreuer und der diesbezüglich schräg angeordneten Grenzfahrgasse - durchgeführt werden.

Die (aktuelle) Ist-Position des Zweischeibenstreuers kann während der Fahrt, insbesondere mittels GPS, erfasst und der (aktuelle) Seitenabstand des Zweischeibenstreuers von der Grenzfahrgasse hieraus ermittelt werden. Die Position(en) der Grenzfahrgasse(n) kann/können hierbei in einer an sich bekannten Weise in einer, insbesondere elektronischen, Landkarte hinterlegt werden.

Die Erfindung betrifft schließlich auch einen Zweischeibenstreuer mit zwei derart gegenläufig rotierbaren Verteilerscheiben, dass - in Fahrtrichtung betrachtet - die rechte Verteilerscheibe entgegen und die linke Verteilerscheibe im Uhrzeigersinn rotiert, und jeweils einem, einer jeweiligen Verteilerscheibe zugeordneten Dosierorgan, wobei die Streucharakteristik der beiden Verteilerscheiben sowie jeweils ein, einer jeweiligen Verteilerscheibe zugeordnetes Dosierorgan mittels einer Steuereinrichtung getrennt voneinander steuerbar sind, welcher dadurch gekennzeichnet ist, dass die Steuereinrichtung zur Durchführung eines Verfahrens der vorgenannten Art ausgebildet ist.

Weitere Merkmale und Vorteile der Erfindung ergeben sich aus der nachfolgenden Beschreibung eines Ausführungsbeispiels unter Bezugnahme auf die Zeichnungen. Dabei zeigen:

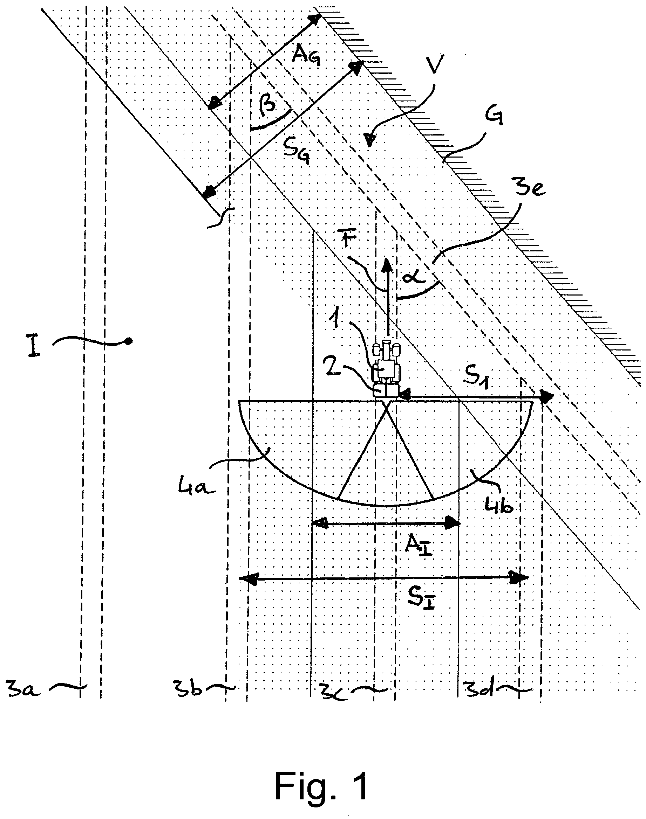

- Fig. 1 bis 4: je eine schematische Draufsicht auf einen von einer Zugmaschine, wie einem Traktor, getragenen Zweischeibenstreuer beim Streuen auf einem Feld mit einer in Bezug auf die im Feldinnern etwa parallel verlaufenden Feldfahrgassen schräg angeordneten Grenzfahrgasse in verschiedenen Positionen des Zweischeibenstreuers.

In den Fig. 1 bis 4 ist ein an einen Traktor 1 angehängter Zweischeibenstreuer 2 anlässlich seiner Fahrt entlang parallel im Feldinnern I eines Feldes angelegter Feldfahrgassen 3a-3d schematisch aus der Vogelperspektive wiedergegeben. Der nicht im einzelnen dargestellte Zweischeibenstreuer 2 weist hierbei zwei gegenläufig, in der Mitte von innen nach außen entgegen der Fahrtrichtung F rotierende, mit Streuschaufeln ausgestattete Verteilerscheiben auf, d.h. die in Fahrtrichtung F linke Verteilerscheibe rotiert im Uhrzeigersinn, während die in Fahrtrichtung rechte Verteilerscheibe entgegen dem Uhrzeigersinn rotiert. Einer jeden Verteilerscheibe ist ein individuell auf- und zusteuerbares Dosierorgan zugeordnet, von welchem das zu verteilende Streugut auf die ihm zugeordnete Verteilerscheibe fällt, um von dort radial fort beschleunigt zu werden. Eine mit einem GPS-Empfänger zur Positionsermittlung wirkverbundene Steuereinrichtung des Zweischeibenstreuers dient in als solches bekannter Weise zur Steuerung der Streuparameter einschließlich der Dosierorgane in Abhängigkeit der Fortbewegungsgeschwindigkeit, der Flug- und/oder Fließeigenschaften des verwendeten Streugutes und der aktuellen Position des aus Traktor 1 und Zweischeibenstreuer 2 gebildeten Gespanns.

Bereits oder gerade bestreute Bereiche sind in den Fig. 1 bis 4 mit einer Punktierung versehen, während die noch zu bestreuenden Bereiche keine Punktierung aufweisen.

In den in Fig. 1 bis 4 gezeigten Situationen fährt der Traktor 1 mit dem an diesen angehängten Zweischeibenstreuer 2 in üblicher Weise bei der Hin- und Rückfahrt in benachbarten Feldfahrgassen 3a, 3b; 3b, 3c; 3c, 3d, so dass sich die Streufächer 4a, 4b der beiden Verteilerscheiben im Regelbetrieb von Fahrgasse zu Fahrgasse überlappen, um der nicht homogenen Streugutverteilung über die Breite der Streufächer 4a, 4b Rechnung zu tragen. In diesem Zusammenhang sei insbesondere auf die in Fig. 1 dargestellte Situation verwiesen, in welcher sich der Zweischeibenstreuer 2 (noch) im Regelbetrieb befindet und die Streufächer 4a, 4b beider Verteilerscheiben dieselbe Form und Größe aufweisen und in Bezug auf die Fahrtrichtung F spiegelsymmetrisch zueinander angeordnet sind. Die Streubreite im Feldinnern I (der Zweischeibenstreuer 2 verrichtet den Regelbetrieb) ist dabei mit dem Bezugszeichen S_{I} versehen, während die Arbeitsbreite im Feldinnern I, welche im vorliegenden Fall - wenn auch nicht notwendigerweise - etwa der halben Streubreite S_{I} entspricht, mit dem Bezugszeichen A_{I} versehen ist. Der Abstand der Feldfahrgassen 3a, 3b, 3c, 3d entspricht demnach etwa der Arbeitsbreite A_{I} im Feldinnern I bzw. der halben Streubreite S_{I} im Feldinnern I.

An dem in Fig. 1 bis 4 rechten Rand des Feldes befindet sich der Feldrand G, welcher schräg in Bezug auf die Feldfahrgassen 3a, 3b, 3c, 3d angeordnet ist und jenseits desselben ein Aufbringen von Streugut weder erforderlich noch erwünscht ist. Parallel zum Feldrand G erstreckt sich nahe desselben in Richtung des Feldinnern I eine Grenzfahrgasse 3e, welche das aus Traktor 1 und Streuer 2 gebildete Gespann bereits durchfahren hat, um - insbesondere unter Einstellung von Randstreuparametern - den Randbereich des Feldes zu streuen. Die Streubreite nahe der Feldgrenze G (der Zweischeibenstreuer 2 verrichtet den Grenzstreubetrieb) ist dabei mit dem Bezugszeichen S_{G} versehen, während die Arbeitsbreite nahe der Feldgrenze G mit dem Bezugszeichen A_{G} versehen ist. Die Grenzfahrgasse 3e erstreckt sich im vorliegenden Ausführungsbeispiel unter einem gleichen Winkel α, β von beispielsweise etwa 30° in Bezug auf alle zeichnerisch dargestellten Feldfahrgassen 3a, 3b, 3c, 3d.

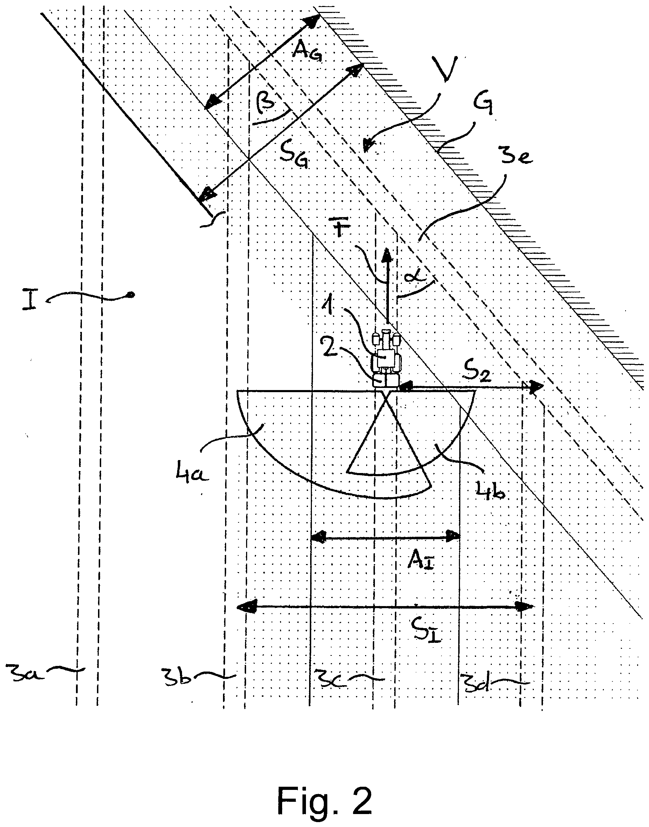

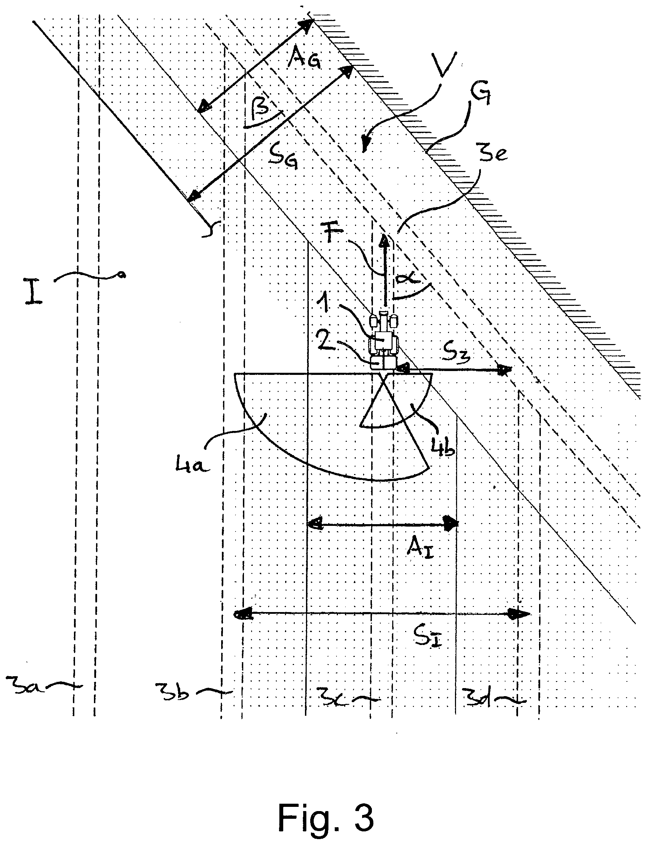

Wie bereits erwähnt, befindet sich das aus Traktor 1 und Zweischeibenstreuer 2 gebildete Gespann bei der in Fig. 1 wiedergegebenen Situation, in welcher die der Grenzfahrgasse 3e zugewandte Verteilerscheibe des Zweischeibenstreuers 2 einen Seitenabstand S₁ von der Grenzfahrgasse 3e erreicht hat, an welchem der Streuer 2 gerade noch im Normal- bzw. Regelbetrieb arbeitet, d.h. beide Verteilerscheiben werden mittels ihrer Dosierorgane mit denselben Massenströmen an Streugut beaufschlagt und erzeugen mehr oder minder identische, aber spiegelbildliche Streufächer 4a, 4b. Der Seitenabstand S₁ ergibt sich dabei im vorliegenden Fall an einer Stelle, an welcher die Arbeitsbreite A_{I} im Feldinnern I etwa die Arbeitsbreite A_{G} nahe dem Feldrand G (Streugutverteilung der Grenzfahrgasse 3e) schneidet. Um bei der Weiterfahrt in Fahrtrichtung F eine Überstreuung des der Grenzfahrgasse 3e zugekehrten Bereiches des Streuers 2 (in Fig. 1 bis 4 rechts derselben) zu verhindern, wird nun, wie insbesondere auch aus Fig. 2 ersichtlich, einerseits der Streufächer 4b der der Grenzfahrgasse 3e zugewandten (rechten) Verteilerscheibe verkleinert, indem beispielsweise deren Drehzahl vermindert wird. Alternativ oder zusätzlich kann beispielsweise der Aufgabepunkt des Streugutes auf diese (rechte) Verteilerscheibe verfrüht, d.h. entgegen der Drehrichtung dieser (rechten) Verteilerscheibe verlagert (nicht gezeigt), und/oder radial nach außen von der Drehachse dieser (rechten) Verteilerscheibe fort verlagert werden, bis der Zweischeibenstreuer 2 seine in Fig. 3 gezeigte Position erreicht hat.

Einhergehend mit der vorgenannten Veränderung des Streufächers 4b der der Grenzfahrgasse 3e zugewandten (rechten) Verteilerscheibe wird vorzugsweise auch die Dosiermenge an Streugut durch entsprechende Zusteuerung ihres Dosierorgans verringert, um dem geringeren Bedarf an Streugut in dem verkleinerten Streufächer 4b Rechnung zu tragen. Dies kann ebenso wie die Veränderung des Streubildes vorzugsweise im Wesentlichen kontinuierlich geschehen, wobei es in Bezug auf die Veränderung des Streubildes beispielsweise auch möglich ist, zunächst (d.h. wenn der Streuer 2 die Position gemäß Fig. 1 erreicht hat) nur eine Maßnahme zu ergreifen (z.B. wird nur die Dosiermenge ihres Dosierorgans verringert, nur der Aufgabepunkt des Streugutes auf die (rechte) Verteilerscheibe verfrüht etc.), während zu einem späteren Zeitpunkt, wie beispielsweise in der in Fig. 2 gezeigten Position des Streuers 2, in welcher der Seitenabstand S₂ bereits merklich kleiner geworden ist als der Seitenabstand S₁, wenigstens eine weitere Maßnahme ergriffen wird (z.B. wird dann zusätzlich die Drehzahl der (rechten) Verteilerscheibe reduziert oder dergleichen).

In der in Fig. 3 wiedergegebenen Situation hat der Zweischeibenstreuer 2 nun eine Position erreicht, welche einem vorherbestimmten minimalen Seitenabstand S₃ der der Grenzfahrgasse 3e zugewandten Verteilerscheibe des Streuers 2 von der Grenzfahrgasse 3e entspricht, ab welchem es bei der Weiterfahrt nicht mehr möglich ist, den zwischen dem Streuer 2 und der Feldfahrgasse 3e befindlichen Feldbereich mittels der dieser zugewandten (rechten) Verteilerscheibe mit der gewünschten Menge an Streugut zu versehen, ohne dass es zumindest bereichsweise zu einer überhöhten oder auch zu geringen Bestreuung kommt. Der minimale Seitenabstand S₃ kann sich dabei insbesondere an einer Stelle ergeben, an welcher sich die Arbeitsbreite des Streufächers (4b) der der Grenzfahrgasse (3e) zugewandten Verteilerscheibe, welche nun durch Einstellung von Grenzwerten für den Aufgabepunkt und/oder für die Drehzahl dieser Verteilerscheibe minimiert worden ist, etwa mit der Arbeitsbreite A_{G} der Streugutverteilung der Grenzfahrgasse 3e schneidet.

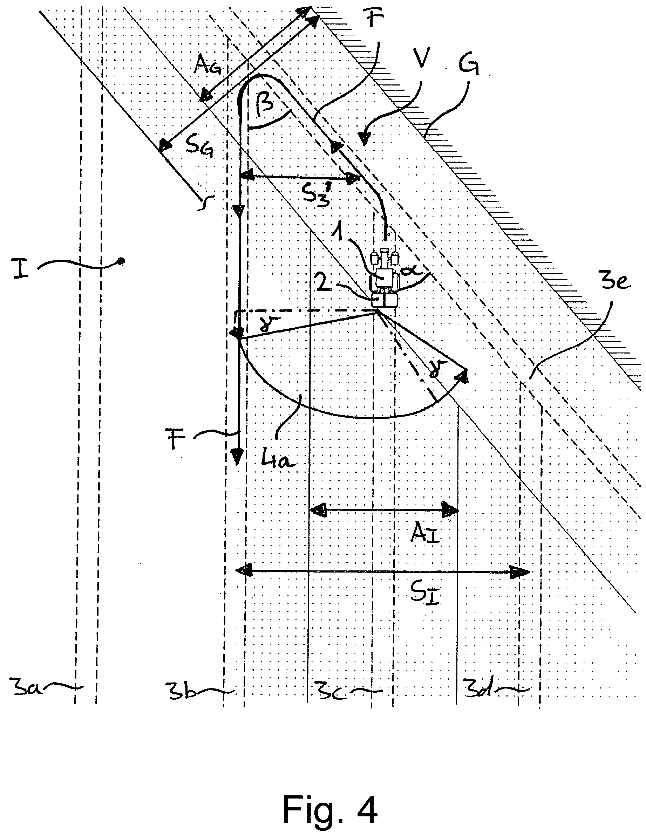

Wie auch der Fig. 4 zu entnehmen ist, wird ab Erreichen der in Fig. 3 gezeigten Position zu diesem Zweck das Dosierorgan der der Grenzfahrgasse 3e zugewandten (rechten) Verteilerscheibe abgeschaltet bzw. geschlossen, so lange bei der Weiterfahrt der minimale Seitenabstand S₃ nicht wieder erreicht bzw. übertroffen worden ist. Die Bestreuung der der Grenzfahrgasse 3e zugewandten, noch nicht hinreichend bestreuten Feldfläche (vgl. insbesondere rechts des Traktors 1 in Fig. 3) übernimmt bei der Weiterfahrt dann die der Grenzfahrgasse 3e abgewandte (linke) Verteilerscheibe, wobei einerseits ihr Streubild entsprechend verändert, andererseits insbesondere auch die Dosiermenge ihres Dosierorgans entsprechend erhöht wird, um dem erhöhten Streugutbedarf Rechnung zu tragen. Die Veränderung des Streubildes der der Grenzfahrgasse abgewandten (linken) Verteilerscheibe kann hierbei wiederum durch eine oder mehrere der folgenden Maßnahmen bewerkstelligt werden:
- Erhöhung der Drehzahl der (linken) Verteilerscheibe, um ihr Streubild und insbesondere ihre Verteilungsbreite insgesamt zu vergrößern;
- Veränderung des Aufgabepunktes des Streugutes auf die (linke) Verteilerscheibe gegen ihre Drehrichtung, um ihr Streubild in Richtung der anderen (rechten) Verteilerscheibe zu verlagern, d.h. um die Rotationsachse der (linken) Verteilerscheibe zu verdrehen;
- Veränderung des Aufgabepunktes des Streugutes auf die (linke) Verteilerscheibe nach außen in Richtung deren Scheibenumfangs, um den Schwerpunkt der Verteilung von links kommend näher in Richtung des zentralen Bereiches hinter dem Streuer 2 zu verlagern.

Im vorliegenden Fall ist zu diesem Zweck, wie der Fig. 4 zu entnehmen ist, der Aufgabepunkt des Streugutes auf die im Uhrzeigersinn rotierende, der Grenzfahrgasse 3e abgewandte Verteilerscheibe entgegen deren Drehrichtung verlagert worden, so dass ihr Streufächer 4a um ihre Drehachse entgegen dem Uhrzeigersinn zu der Grenzfahrgasse 3e hin um einen Winkel γ verdreht worden ist (vgl. den in Fig. 4 strichpunktiert dargestellten Streufächer vor der vorgenannten Verlagerung des Aufgabepunktes). Im Zuge der Fahrt des aus Traktor 1 und Zweischeibenstreuer 2 gebildeten Gespanns aus der Position gemäß Fig. 3 in die in Fig. 4 wiedergegebene Position kann sowohl die Dosiermenge des Dosierorgans der (linken) Verteilerscheibe als auch die Veränderung deren Streubildes wiederum vorzugsweise etwa kontinuierlich geschehen, d.h. die Geometrie des Streubildes wird entsprechend dem sich bei der Weiterfahrt verringernden Seitenabstand des Streuers 2 von der Grenzfahrgasse 3e wieder verkleinert bzw. wieder von der Grenzfahrgasse 3e fort (nach links) verschoben, während die Dosiermenge entsprechend dem sich verringernden Bedarf an Streugut wieder vermindert wird.

Sobald im Zuge der Weiterfahrt des an den Traktor 1 angehängten Zweischeibenstreuers 2 von seiner in Fig. 4 gezeigten Position in Richtung des Pfeils F der gesamte, der Grenzfahrgasse 3e zugekehrte Bereich bestreut worden ist, können die Dosierorgane beider Verteilerscheiben des Zweischeibenstreuers 2 geschlossen werden. Das aus dem Traktor 1 und dem Zweischeibenstreuer 2 gebildete Gespann durchfährt das Vorgewende V entlang dem in Fig. 4 oberen Ende der Feldfahrgasse 3c, dem in Fig. 4 oberen Ende der benachbarten Feldfahrgasse 3b sowie des zwischen diesen befindlichen Abschnittes der Grenzfahrgasse 3e. Nach dem vorgenannten Wenden des Traktors 1 mit dem Zweischeibenstreuer 2 im Vorgewende V wird anlässlich seiner Zurückfahrt (in Fig. 4 nach unten) entlang der benachbarten Fahrgasse 3b der - in der in Fig. 4 gezeigten Position des Streuers 2 links desselben gelegene - Feldbereich nahe der Grenzfahrgasse 3e, welcher nach Abschalten beider Dosierorgane während der Durchfahrt durch die Feldfahrgasse 3c noch nicht hinreichend bestreut worden ist, ebenfalls noch bestreut. Dies geschieht anlässlich der Fortfahrt auf der Feldfahrgasse 3b von der Grenzfahrgasse 3e fort, wobei gegenüber der Zufahrt auf die Grenzfahrgasse 3e umgekehrt vorgegangen wird, d.h. das Dosierorgan der der Grenzfahrgasse 3e zugewandten (nunmehr in Fahrtrichtung F linken, aber bei der Fahrt von "oben" nach "unten" in Fig. 4 rechts befindlichen) Verteilerscheibe bleibt so lange geschlossen, bis der minimale Seitenabstand S₃' erreicht worden ist, welcher sich wiederum im Wesentlichen an einer Stelle ergeben kann, an welcher sich die Arbeitsbreite des Streufächers der der Grenzfahrgasse (3e) zugewandten Verteilerscheibe, welche durch Einstellung von Grenzwerten für den Aufgabepunkt und/oder für die Drehzahl dieser Verteilerscheibe minimiert wird, etwa mit der Arbeitsbreite A_{G} der Streugutverteilung der Grenzfahrgasse 3e schneidet. Die Streugutverteilung wird ebenfalls so lange von der anderen, der Grenzfahrgasse 3e abgewandten (nunmehr in Fahrtrichtung F rechten) Verteilerscheibe übernommen usw.

## Patentansprüche

1. Verfahren zur gleichmäßigen Verteilung von Streugut mittels eines Zweischeibenstreuers (2), welcher zwei derart gegenläufig rotierbare Verteilerscheiben aufweist, dass - in Fahrtrichtung betrachtet - die rechte Verteilerscheibe entgegen und die linke Verteilerscheibe im Uhrzeigersinn rotiert, und bei welchem die Streucharakteristik der beiden Verteilerscheiben sowie jeweils ein, einer jeweiligen Verteilerscheibe zugeordnetes Dosierorgan getrennt voneinander steuerbar sind, zwischen der beim Durchfahren von Feldfahrgassen (3a, 3b, 3c, 3d) durch Überlappung der Streufächer (4a, 4b) erzielten gleichmäßigen Streugutverteilung im Feldinnern (I) und der beim Durchfahren wenigstens einer nahe der Feldgrenze (G) gelegenen Grenzfahrgasse (3e) erzielten Streugutverteilung, wobei im Übergangsbereich zwischen den Feldfahrgassen (3a, 3b, 3c, 3d) und der Grenzfahrgasse (3e) Maßnahmen vorgenommen werden, um die Regelbetriebseinstellungen des Zweischeibenstreuers (2) hinsichtlich Dosiermenge und/oder Aufgabepunkt und/oder Drehzahl einer jeweiligen Verteilerscheiben zu verändern, wobei während der Fahrt von einer jeweiligen Feldfahrgasse (3c) auf eine unter einem Winkel (α) größer 0° und kleiner 90° in Bezug auf diese Feldfahrgasse (3c) angeordnete Grenzfahrgasse (3e) zu ab Erreichen eines minimalen, in Bezug auf die jeweilige Feldfahrgasse (3c) seitlichen Abstandes (S₃) der der Grenzfahrgasse (3e) zugewandten Verteilerscheibe des Zweischeibenstreuers (2) von der Grenzfahrgasse (3e) das Dosierorgan der der Grenzfahrgasse (3e) zugewandten Verteilerscheibe abgeschaltet wird, **dadurch gekennzeichnet, dass** ferner
(a) die Dosiermenge des Dosierorgans der der Grenzfahrgasse (3e) abgewandten Verteilerscheibe erhöht wird; und/oder
(b) das Streubild der der Grenzfahrgasse (3e) abgewandten Verteilerscheibe durch wenigstens eine Maßnahme aus der folgenden Gruppe verändert wird:
- Verändern des Aufgabepunktes des Streugutes auf die der Grenzfahrgasse (3e) abgewandte Verteilerscheibe gegen die Drehrichtung dieser Verteilerscheibe, so dass deren Streubild in Richtung der der Grenzfahrgasse (3e) zugewandten Verteilerscheibe, deren Dosierorgan geschlossen worden ist, verlagert wird;
- Verändern des Aufgabepunktes des Streugutes auf die der Grenzfahrgasse (3e) abgewandte Verteilerscheibe nach außen in Richtung deren Scheibenumfangs, so dass deren Schwerpunkt der Verteilung näher an den zentralen Bereich des Zweischeibenstreuers herangerückt wird; und
- Erhöhen der Drehzahl der der Grenzfahrgasse (3e) abgewandten Verteilerscheibe, so dass deren Streubild insgesamt vergrößert wird, um die der Grenzfahrgasse (3e) zugewandte Seite der anderen Verteilerscheibe, deren Dosierorgan geschlossen worden ist, in einem höheren Maße zu überlappen;
so dass die der Grenzfahrgasse (3e) abgewandte Verteilerscheibe die Streugutverteilung auf der der Grenzfahrgasse (3e) zugewandten Seite des Zweischeibenstreuers (2) übernimmt, insbesondere so lange der minimale Seitenabstand (S₃) nicht wieder übertroffen wird.

2. Verfahren zur gleichmäßigen Verteilung von Streugut mittels eines Zweischeibenstreuers (2), welcher zwei derart gegenläufig rotierbare Verteilerscheiben aufweist, dass - in Fahrtrichtung betrachtet - die rechte Verteilerscheibe entgegen und die linke Verteilerscheibe im Uhrzeigersinn rotiert, und bei welchem die Streucharakteristik der beiden Verteilerscheiben sowie jeweils ein, einer jeweiligen Verteilerscheibe zugeordnetes Dosierorgan getrennt voneinander steuerbar sind, zwischen der beim Durchfahren von Feldfahrgassen (3a, 3b, 3c, 3d) durch Überlappung der Streufächer (4a, 4b) erzielten gleichmäßigen Streugutverteilung im Feldinnern (I) und der beim Durchfahren wenigstens einer nahe der Feldgrenze (G) gelegenen Grenzfahrgasse (3e) erzielten Streugutverteilung, wobei im Übergangsbereich zwischen den Feldfahrgassen (3a, 3b, 3c, 3d) und der Grenzfahrgasse (3e) Maßnahmen vorgenommen werden, um die Regelbetriebseinstellungen des Zweischeibenstreuers (2) hinsichtlich Dosiermenge und/oder Aufgabepunkt und/oder Drehzahl einer jeweiligen Verteilerscheiben zu verändern, wobei während der Fahrt auf einer jeweiligen Feldfahrgasse (3b) von der unter einem Winkel (β) größer 0° und kleiner 90° in Bezug auf diese Feldfahrgasse (3b) angeordneten Grenzfahrgasse (3e) fort bis zum Erreichen eines minimalen, in Bezug auf die jeweilige Feldfahrgasse (3b) seitlichen Abstandes (S₃') der der Grenzfahrgasse (3e) zugewandten Verteilerscheibe des Zweischeibenstreuers (2) von der Grenzfahrgasse (3e) das Dosierorgan der der Grenzfahrgasse (3e) zugewandten Verteilerscheibe abgeschaltet wird, **dadurch gekennzeichnet, dass** ferner
(a) die Dosiermenge des Dosierorgans der der Grenzfahrgasse (3e) abgewandten Verteilerscheibe erhöht wird; und/oder
(b) das Streubild der der Grenzfahrgasse (3e) abgewandten Verteilerscheibe durch wenigstens eine Maßnahme aus der folgenden Gruppe verändert wird:
- Verändern des Aufgabepunktes des Streugutes auf die der Grenzfahrgasse (3e) abgewandte Verteilerscheibe gegen die Drehrichtung dieser Verteilerscheibe, so dass deren Streubild in Richtung der der Grenzfahrgasse (3e) zugewandten Verteilerscheibe, deren Dosierorgan geschlossen worden ist, verlagert wird;
- Verändern des Aufgabepunktes des Streugutes auf die der Grenzfahrgasse (3e) abgewandte Verteilerscheibe nach außen in Richtung deren Scheibenumfangs, so dass deren Schwerpunkt der Verteilung näher an den zentralen Bereich des Zweischeibenstreuers herangerückt wird; und
- Erhöhen der Drehzahl der der Grenzfahrgasse (3e) abgewandten Verteilerscheibe, so dass deren Streubild insgesamt vergrößert wird, um die der Grenzfahrgasse (3e) zugewandte Seite der anderen Verteilerscheibe, deren Dosierorgan geschlossen worden ist, in einem höheren Maße zu überlappen; so dass die der Grenzfahrgasse (3e) abgewandte Verteilerscheibe die Streugutverteilung auf der der Grenzfahrgasse (3e) zugewandten Seite des Zweischeibenstreuers (2) übernimmt, insbesondere bis der minimale Seitenabstand (S₃') wieder übertroffen wird.

3. Verfahren nach Anspruch 1 oder 2, **dadurch gekennzeichnet, dass** während der Fahrt
- auf die Grenzfahrgasse (3e) zu ab
bzw.
- von der Grenzfahrgasse (3e) fort bis zum
Erreichen des vorherbestimmbaren, minimalen Seitenabstandes (S₃; S₃') der der Grenzfahrgasse (3e) zugewandten Verteilerscheibe des Zweischeibenstreuers (2) von der Grenzfahrgasse (3e) sowohl die Dosiermenge des Dosierorgans der der Grenzfahrgasse (3e) abgewandten Verteilerscheibe erhöht als auch deren Streubild verändert wird.

4. Verfahren nach einem der Ansprüche 1 bis 3, **dadurch gekennzeichnet, dass** zur Veränderung des Streubildes der der Grenzfahrgasse (3e) abgewandten Verteilerscheibe während der Fahrt
- auf die Grenzfahrgasse (3e) zu ab
bzw.
- von der Grenzfahrgasse (3e) fort bis zum
Erreichen des vorherbestimmbaren, minimalen Seitenabstandes (S₃; S₃') der der Grenzfahrgasse (3e) zugewandten Verteilerscheibe des Zweischeibenstreuers (2) von der Grenzfahrgasse (3e) zumindest der Aufgabepunkt des Streugutes auf die der Grenzfahrgasse (3e) abgewandte Verteilerscheibe gegen die Drehrichtung dieser Verteilerscheibe und/oder nach außen in Richtung deren Scheibenumfangs verändert wird.

5. Verfahren nach einem der Ansprüche 1 bis 4, **dadurch gekennzeichnet, dass** der minimale Seitenabstand (S₃; S₃') in Abhängigkeit wenigstens eines versuchstechnisch ermittelbaren Kennwertes für die Flugeigenschaften des verwendeten Streugutes festgelegt wird, wobei sich der minimale Seitenabstand (S₃; S₃') an einer Stelle ergibt, an welcher der Streufächer (4b) der der Grenzfahrgasse (3e) zugewandten Verteilerscheibe durch Einstellung von Grenzwerten für den Aufgabepunkt und/oder für die Drehzahl dieser Verteilerscheibe minimiert worden ist und unter Gewährleistung einer gleichmäßigen Streugutverteilung mit der Streugutverteilung der Grenzfahrgasse (3e) überlappt.

6. Verfahren nach einem der Ansprüche 1 bis 5, **dadurch gekennzeichnet, dass** sich der minimale Seitenabstand (S₃; S₃') an einer Stelle ergibt, an welcher sich die Arbeitsbreite des Streufächers (4b) der der Grenzfahrgasse (3e) zugewandten Verteilerscheibe, welche durch Einstellung von Grenzwerten für den Aufgabepunkt und/oder für die Drehzahl dieser Verteilerscheibe minimiert worden ist, etwa mit der Arbeitsbreite (A_{G}) der Streugutverteilung der Grenzfahrgasse (3e) schneidet.

7. Verfahren nach einem der Ansprüche 1 bis 5, **dadurch gekennzeichnet, dass** während der Fahrt
- von der Feldfahrgasse (3c) auf die Grenzfahrgasse (3e) zu ab Erreichen eines gegenüber dem minimalen Seitenabstand (S₃) größeren Seitenabstandes (S₁) der der Grenzfahrgasse (3e) zugewandten Verteilerscheibe des Zweischeibenstreuers (2) von der Grenzfahrgasse (3e)
bzw.
- auf der Feldfahrgasse (3b) von der Grenzfahrgasse (3e) fort ab Erreichen des minimalen Seitenabstandes (S₃) und bis zum Erreichen eines gegenüber dem minimalen Seitenabstand (S₃') größeren Seitenabstandes der der Grenzfahrgasse (3e) zugewandten Verteilerscheibe des Zweischeibenstreuers (2) von der Grenzfahrgasse (3e)
bei der Weiterfahrt zunächst
(a) die Dosiermenge des Dosierorgans der der Grenzfahrgasse (3e) zugewandten Verteilerscheibe vermindert wird; und/oder
(b) das Streubild der der Grenzfahrgasse (3e) zugewandten Verteilerscheibe durch wenigstens eine Maßnahme aus der folgenden Gruppe verändert wird:
- Verändern des Aufgabepunktes des Streugutes auf die der Grenzfahrgasse (3e) zugewandte Verteilerscheibe gegen die Drehrichtung dieser Verteilerscheibe;
- Verändern des Aufgabepunktes des Streugutes auf die der Grenzfahrgasse (3e) zugewandte Verteilerscheibe nach außen in Richtung deren Scheibenumfangs; und
- Vermindern der Drehzahl der der Grenzfahrgasse (3e) zugewandten Verteilerscheibe.

8. Verfahren nach Anspruch 7, **dadurch gekennzeichnet, dass** sich der gegenüber dem minimalen Seitenabstand (S₃) größere Seitenabstand (S₁) der der Grenzfahrgasse (3e) zugewandten Verteilerscheibe von der Grenzfahrgasse (3e) an einer Stelle ergibt, an welcher sich die Arbeitsbreite (A_{I}) des Streufächers (4b) der der Grenzfahrgasse (3e) zugewandten Verteilerscheibe im Regelbetrieb etwa mit der Arbeitsbreite (A_{G}) der Streugutverteilung der Grenzfahrgasse (3e) schneidet.

9. Verfahren nach Anspruch 7 oder 8, **dadurch gekennzeichnet, dass** während der Fahrt
- auf die Grenzfahrgasse (3e) zu ab Erreichen des gegenüber dem minimalen Seitenabstand (S₃) größeren Seitenabstandes (S₁) von der Grenzfahrgasse (3e)
bzw.
- von der Grenzfahrgasse (3e) fort ab Erreichen des minimalen Seitenabstandes (S₃) und bis zum Erreichen des demgegenüber größeren Seitenabstandes von der Grenzfahrgasse (3e)
bei der Weiterfahrt sowohl die Dosiermenge des Dosierorgans der der Grenzfahrgasse (3e) zugewandten Verteilerscheibe vermindert als auch deren Streubild verändert wird.

10. Verfahren nach einem der Ansprüche 7 bis 9, **dadurch gekennzeichnet, dass** zur Veränderung des Streubildes der der Grenzfahrgasse (3e) zugewandten Verteilerscheibe zumindest der Aufgabepunkt des Streugutes auf die der Grenzfahrgasse (3e) zugewandte Verteilerscheibe gegen die Drehrichtung dieser Verteilerscheibe und/oder nach außen in Richtung deren Scheibenumfangs verändert wird.

11. Verfahren nach einem der Ansprüche 1 bis 10, **dadurch gekennzeichnet, dass** während der Fahrt
- von der Feldfahrgasse (3c) auf die Grenzfahrgasse (3e) zu
bzw.
- auf der Feldfahrgasse (3b) von der Grenzfahrgasse fort
die Dosiermenge des Dosierorgans der der Grenzfahrgasse (3e) abgewandten Verteilerscheibe, deren Drehzahl und deren Aufgabepunkt des Streugutes
- unverändert bleibt, so lange der minimale Seitenabstand (S₃) der der Grenzfahrgasse (3e) zugewandten Verteilerscheibe des Zweischeibenstreuers (2) von der Grenzfahrgasse (3e) nicht erreicht worden ist;
bzw.
- gemäß dem Regelbetrieb eingestellt wird, sobald der minimale Seitenabstand (S₃') der der Grenzfahrgasse (3e) zugewandten Verteilerscheibe des Zweischeibenstreuers (2) von der Grenzfahrgasse (3e) wieder erreicht worden ist.

12. Verfahren nach einem der Ansprüche 1 bis 10, **dadurch gekennzeichnet, dass** während der Fahrt
- von der Feldfahrgasse (3c) auf die Grenzfahrgasse (3e) zu bereits vor Erreichen des minimalen Seitenabstandes (S₃) der der Grenzfahrgasse (3e) zugewandten Verteilerscheibe des Zweischeibenstreuers (2) von der Grenzfahrgasse (3e), insbesondere wenn oder nachdem der Zweischeibenstreuer (2) eine Position erreicht hat, an welcher sich die Arbeitsbreite (A_{I}) des Streufächers (4b) der der Grenzfahrgasse (3e) zugewandten Verteilerscheibe im Regelbetrieb mit der Arbeitsbreite (A_{G}) der Streugutverteilung der Grenzfahrgasse (3e) schneidet,
bzw.
- auf der Feldfahrgasse (3b) von der Grenzfahrgasse (3e) fort nach Erreichen des minimalen Seitenabstandes (S₃') der der Grenzfahrgasse (3e) zugewandten Verteilerscheibe des Zweischeibenstreuers (2) von der Grenzfahrgasse (3e), insbesondere bis oder bevor der Zweischeibenstreuer (2) eine Position erreicht hat, an welcher sich die Arbeitsbreite (A_{I}) des Streufächers (4b) der der Grenzfahrgasse (3e) zugewandten Verteilerscheibe im Regelbetrieb mit der Arbeitsbreite (A_{G}) der Streugutverteilung der Grenzfahrgasse (3e) schneidet,
(a) die Dosiermenge des Dosierorgans der der Grenzfahrgasse (3e) abgewandten Verteilerscheibe erhöht wird; und/oder
(b) das Streubild der der Grenzfahrgasse (3e) abgewandten Verteilerscheibe durch wenigstens eine Maßnahme aus der folgenden Gruppe verändert wird:
- Verändern des Aufgabepunktes des Streugutes auf die der Grenzfahrgasse (3e) abgewandte Verteilerscheibe gegen die Drehrichtung dieser Verteilerscheibe;
- Verändern des Aufgabepunktes des Streugutes auf die der Grenzfahrgasse (3e) abgewandte Verteilerscheibe nach außen in Richtung deren Scheibenumfangs; und
- Erhöhen der Drehzahl der der Grenzfahrgasse (3e) abgewandten Verteilerscheibe.

13. Verfahren nach einem der Ansprüche 1 bis 12, **dadurch gekennzeichnet, dass**
- die Veränderung der Dosiermenge des Dosierorgans der jeweiligen Verteilerscheibe; und/oder
- die Veränderung der Drehzahl der jeweiligen Verteilerscheibe; und/oder
- die Veränderung des Aufgabepunktes des Streugutes auf die jeweilige Verteilerscheibe kontinuierlich in Abhängigkeit der aktuellen Fortbewegungsgeschwindigkeit des Zweischeibenstreuers (2) entlang der jeweiligen Feldfahrgasse (3a, 3b, 3c, 3d) sowie des aktuellen Seitenabstandes der der Grenzfahrgasse (3e) zugewandten Verteilerscheibe des Zweischeibenstreuers (2) von der Grenzfahrgasse (3e) gesteuert wird.

14. Verfahren nach einem der Ansprüche 1 bis 13, **dadurch gekennzeichnet, dass** die Ist-Position des Zweischeibenstreuers (2), z.B. mittels GPS, erfasst und der aktuelle Seitenabstand der der Grenzfahrgasse (3e) zugewandten Verteilerscheibe des Zweischeibenstreuers (2) von der Grenzfahrgasse (3e) hieraus ermittelt wird, wobei insbesondere die Position der Grenzfahrgasse (3e) und gegebenenfalls deren Arbeits- (A_{G}) und/oder Streubreite (S_{G}) in einer elektronischen Landkarte hinterlegt wird.

15. Zweischeibenstreuer (2) mit zwei derart gegenläufig rotierbaren Verteilerscheiben, dass - in Fahrtrichtung betrachtet - die rechte Verteilerscheibe entgegen und die linke Verteilerscheibe im Uhrzeigersinn rotiert, und mit jeweils einem, einer jeweiligen Verteilerscheibe zugeordneten Dosierorgan, wobei die Streucharakteristik der beiden Verteilerscheiben sowie jeweils ein, einer jeweiligen Verteilerscheibe zugeordnetes Dosierorgan mittels einer Steuereinrichtung getrennt voneinander steuerbar sind, **dadurch gekennzeichnet, dass** die Steuereinrichtung zur Durchführung eines Verfahrens nach einem der vorangehenden Ansprüche ausgebildet ist.

## Claims

1. Method for the uniform distribution of granular material by means of a twin-disc spreader (2) which has two distributor discs that can be rotated in opposite directions in such a way that - as viewed in the direction of travel - the right-hand distributor disc rotates in the anticlockwise direction and the left-hand distributor disc rotates in the clockwise direction, and in which the spreading characteristics of the two distributor discs and respectively one metering element assigned to a respective distributor disc are controllable separately from each other, between the uniform granular material distribution achieved in the field interiors (I) when travelling through field lanes (3a, 3b, 3c, 3d) by means of overlapping the spread fans (4a, 4b) and the granular material distribution achieved when travelling through at least one border lane (3e) placed close to the field boundary (G) wherein, in the transition region between the field lanes (3a, 3b, 3c, 3d) and the border lane (3e), measures are taken in order to change the control operation settings of the twin-disc spreader (2) with regard to metering quantity and/or discharge point and/or rotational speed of a respective distributor disc, wherein, during the travel from a respective field lane (3c) towards a border lane (3e) arranged at an angle (α) greater than 0° and less than 90° in relation to this field lane (3c), beginning when reaching a minimal lateral spacing (S₃), in relation to the respective field lane (3c), of the distributor disc of the twin-disc spreader (2) that faces the border lane (3e) from the border lane (3e), the metering element of the distributor disc that faces the border lane (3e) is switched off, **characterized in that**, in addition,
(a) the metered quantity from the metering element of the distributor disc that faces away from the border lane (3e) is increased; and/or
(b) the spreading pattern of the distributor disc that faces away from the border lane (3e) is changed by means of at least one measure from the following group:
- changing the discharge point of the granular material onto the distributor disc that faces away from the border lane (3e) towards the direction of rotation of this distributor disc, so that its spreading pattern is displaced in the direction of the distributor disc which faces the border lane (3e) and of which the metering element has been closed;
- changing the discharge point of the granular material onto the distributor disc that faces away from the border lane (3e) outwards in the direction of its disc circumference, so that its centre of gravity of the distribution is moved closer to the central region of the twin-disc spreader; and
- increasing the rotational speed of the distributor disc that faces away from the border lane (3e), so that its spreading pattern is enlarged overall, in order to overlap to a greater extent the side of the other distributor disc which faces the border lane (3e) and of which the metering element has been closed;
so that the distributor disc that faces away from the border lane (3e) performs the granular material distribution on the side of the twin-disc spreader (2) that faces the border lane (3e), in particular as long as the minimal lateral spacing (S₃) is not overshot again.

2. Method for the uniform distribution of granular material by means of a twin-disc spreader (2) which has two distributor discs that can be rotated in opposite directions in such a way that - as viewed in the direction of travel - the right-hand distributor disc rotates in the anticlockwise direction and the left-hand distributor disc rotates in the clockwise direction, and in which the spreading characteristics of the two distributor discs and respectively one metering element assigned to a respective distributor disc are controllable separately from each other, between the uniform granular material distribution achieved in the field interiors (I) when travelling through field lanes (3a, 3b, 3c, 3d) by means of overlapping the spread fans (4a, 4b) and the granular material distribution achieved when travelling through at least one border lane (3e) placed close to the field boundary (G) wherein, in the transition region between the field lanes (3a, 3b, 3c, 3d) and the border lane (3e), measures are taken in order to change the control operation settings of the twin-disc spreader (2) with regard to metering quantity and/or discharge point and/or rotational speed of a respective distributor disc, wherein, during the travel on a respective field lane (3b) away from a border lane (3e) arranged at an angle (β) greater than 0° and less than 90° in relation to this field lane (3b), until reaching a minimal lateral spacing (S₃'), in relation to the respective field lane (3b), of the distributor disc of the twin-disc spreader (2) that faces the border lane (3e) from the border lane (3e), the metering element of the distributor disc that faces the border lane (3e) is switched off, **characterized in that**, in addition,
(a) the metered quantity from the metering element of the distributor disc that faces away from the border lane (3e) is increased; and/or
(b) the spreading pattern of the distributor disc that faces away from the border lane (3e) is changed by means of at least one measure from the following group:
- changing the discharge point of the granular material onto the distributor disc that faces away from the border lane (3e) towards the direction of rotation of this distributor disc, so that its spreading pattern is displaced in the direction of the distributor disc which faces the border lane (3e) and of which the metering element has been closed;
- changing the discharge point of the granular material onto the distributor disc that faces away from the border lane (3e) outwards in the direction of its disc circumference, so that its centre of gravity of the distribution is moved closer to the central region of the twin-disc spreader; and
- increasing the rotational speed of the distributor disc that faces away from the border lane (3e), so that its spreading pattern is enlarged overall, in order to overlap to a greater extent the side of the other distributor disc which faces the border lane (3e) and of which the metering element has been closed;
so that the distributor disc that faces away from the border lane (3e) performs the granular material distribution on the side of the twin-disc spreader (2) that faces the border lane (3e), in particular until the minimal lateral spacing (S₃') is overshot again.

3. Method according to Claim 1 or 2, **characterized in that** during the travel
- towards the border lane (3e), starting from or
- away from the border lane (3e), until reaching the previously determinable minimal lateral spacing (S₃; S₃') from the border lane (3e) of the distributor disc of the twin-disc spreader (2) that faces the border lane (3e), both the metered quantity from the metering element of the distributor disc that faces away from the border lane (3e) is increased and its spreading pattern is changed.

4. Method according to one of Claims 1 to 3, **characterized in that** to change the spreading pattern of the distributor disc that faces away from the border lane (3e), during the travel
- towards the border lane (3e), starting from or
- away from the border lane (3e), until reaching the previously determinable minimal lateral spacing (S₃; S₃') from the border lane (3e) of the distributor disc of the twin-disc spreader (2) that faces the border lane (3e), at least the discharge point of the granular material onto the distributor disc that faces away from the border lane (3e) is changed towards the direction of rotation of this distributor disc and/or outwards in the direction of its disc circumference.

5. Method according to one of Claims 1 to 4, **characterized in that** the minimal lateral spacing (S₃; S₃') is defined on the basis of at least one characteristic value that can be determined by trial for the flight characteristics of the granular material used, wherein the minimal lateral spacing (S₃; S₃') results at a point at which the spread fans (4b) of the distributor disc that faces the border lane (3e) have been minimized by setting limiting values for the discharge point and/or for the rotational speed of this distributor disc and overlaps the granular material distribution of the border lane (3e) whilst ensuring a uniform granular material distribution.

6. Method according to one of Claims 1 to 5, **characterized in that** the minimal lateral spacing (S₃; S₃') results at a point at which the working width of the spread fan (4b) of the distributor disc that faces the border lane (3e), which has been minimized by setting limiting values for the discharge point and/or for the rotational speed of this distributor disc, approximately intersects the working width (A_{G}) of the granular material distribution of the border lane (3e).

7. Method according to one of Claims 1 to 5, **characterized in that** during the travel
- from the field lane (3c) towards the border lane (3e), after reaching a lateral spacing (S₁) from the border lane (3e) that is greater than the minimal lateral spacing (S₃) of the distributor disc of the twin-disc spreader (2) that faces the border lane (3e),
or
- on the field lane (3b) away from the border lane (3e), after reaching the minimal lateral spacing (S₃) and until reaching a lateral spacing from the border lane (3e) that is greater than the minimal lateral spacing (S₃') of the distributor disc of the twin-disc spreader (2) that faces the border lane (3e), during the onward travel firstly
(a) the metered quantity from the metering element of the distributor disc that faces the border lane (3e) is reduced; and/or
(b) the spreading pattern of the distributor disc that faces the border lane (3e) is changed by at least one measure from the following group:
- changing the discharge point of the granular material onto the distributor disc that faces the border lane (3e) towards the direction of rotation of this distributor disc;
- changing the discharge point of the granular material onto the distributor disc that faces the border lane (3e) outwards in the direction of its disc circumference; and
- reducing the rotational speed of the distributor disc that faces the border lane (3e).

8. Method according to Claim 7, **characterized in that** the lateral spacing (S₁) from the border lane (3e) which is greater than the minimal spacing (S₃) of the distributor disc that faces the border lane (3e) results at a point at which the working width (A_{I}) of the spread fan (4b) of the distributor disc that faces the border lane (3e) during control operation approximately intersects the working width (A_{G}) of the granular material distribution of the border lane (3e).

9. Method according to Claim 7 or 8, **characterized in that** during the travel
- towards the border lane (3e), after reaching the lateral spacing (S₁) from the border lane (3e) that is greater than the minimal lateral spacing (S₃),
or
- away from the border lane (3e), after reaching the minimal lateral spacing (S₃) and until reaching the comparatively greater lateral spacing from the border lane (3e),
during the onward travel both the metered quantity from the metering element of the distributor disc that faces the border lane (3e) is reduced and its spreading pattern is changed.

10. Method according to one of Claims 7 to 9, **characterized in that** to change the spreading pattern of the distributor disc that faces the border lane (3e), at least the discharge point of the granular material onto the distributor disc that faces the border lane (3e) is changed towards the direction of rotation of this distributor disc and/or is changed outwards in the direction of its disc circumference.

11. Method according to one of Claims 1 to 10, **characterized in that** during the travel
- from the field lane (3c) towards the border lane (3e)
or
- on the field lane (3b) away from the border lane
the metered quantity from the metering element of the distributor disc that faces away from the border lane (3e) and its rotational speed and its discharge point of the granular material
- remain unchanged as long as the minimal lateral spacing (S₃) from the border lane (3e) of the distributor disc of the twin-disc spreader (2) that faces the border lane (3e) has not been reached;
or
- is set in accordance with the control operation as soon as the minimal lateral spacing (S₃') from the border lane (3e) of the distributor disc of the twin-disc spreader (2) that faces the border lane (3e) has been reached again.

12. Method according to one of Claims 1 to 10, **characterized in that** during the travel
- on the field lane (3c) towards the border lane (3e), even before reaching the minimal lateral spacing (S₃) from the border lane (3e) of the distributor disc of the twin-disc spreader (2) that faces the border lane (3e), in particular when or after the twin-disc spreader (2) has reached a position in which the working width (A_{I}) of the spread fan (4b) of the distributor disc that faces the border lane (3e) during control operation intersects the working width (A_{G}) of the granular material distribution of the border lane (3e),
or
- on the field lane (3b) away from the border lane (3e), after reaching the minimal lateral spacing (S₃') from the border lane (3e) of the distributor disc of the twin-disc spreader (2) that faces the border lane (3e), in particular until or before the twin-disc spreader (2) has reached a position in which the working width (A_{I}) of the spread fan (4b) of the distributor disc that faces the border lane (3e) during control operation intersects the working width (A_{G}) of the granular material distribution of the border lane (3e),
(a) the metered quantity from the metering element of the distributor disc that faces away from the border lane (3e) is increased; and/or
(b) the spreading pattern of the distributor disc that faces away from the border lane (3e) is changed by at least one measure from the following group:
- changing the discharge point of the granular material onto the distributor disc that faces away from the border lane (3e) towards the direction of rotation of this distributor disc;
- changing the discharge point of the granular material onto the distributor disc that faces away from the border lane (3e) outwards in the direction of its disc circumference; and
- increasing the rotational speed of the distributor disc that faces away from the border lane (3e).

13. Method according to one of Claims 1 to 12, **characterized in that**
- the change in the metered quantity from the metering element of the respective distributor disc; and/or
- the change in the rotational speed of the respective distributor disc; and/or
- the change in the discharge point of the granular material onto the respective distributor disc
is controlled continuously on the basis of the current onward movement speed of the twin-disc spreader (2) along the respective field lane (3a, 3b, 3c, 3d) and of the current lateral spacing from the border lane (3e) of the distributor disc of the twin-disc spreader (2) that faces the border lane (3e).

14. Method according to one of Claims 1 to 13, **characterized in that** the current position of the twin-disc spreader (2) is detected, e.g. by means of GPS, and the current lateral spacing from the border lane (3e) of the distributor disc of the twin-disc spreader (2) that faces the border lane (3e() is determined therefrom, wherein in particular the position of the border lane (3e) and, if appropriate, its working width (A_{G}) and/or spreading width (S_{G}) is stored in an electronic map.

15. Twin-disc spreader (2) having two distributor discs that can be rotated in opposite directions in such a way that - as viewed in the direction of travel - the right-hand distributor disc rotates in the anticlockwise direction and the left-hand distributor disc rotates in the clockwise direction, and having respectively one metering element assigned to a respective distributor disc, wherein the spreading characteristics of the two distributor discs and respectively one metering element assigned to a respective distributor disc are controllable separately from each other by means of a control device, **characterized in that** the control device is designed to carry out a method according to any one of the preceding claims.

## Revendications

1. Procédé pour la distribution uniforme de produit dispersible à l'aide d'un épandeur à deux disques (2), ledit épandeur comportant deux disques de distribution pouvant tourner en sens opposé de telle sorte que - vus dans la direction d'avancée - le disque de distribution droit tourne dans le sens contraire des aiguilles d'une montre et que le disque de distribution gauche toure dans le sens des aiguilles d'une montre, et dans lequel la caractéristique de dispersion des deux disques de distribution ainsi que respectivement un organe de dosage associé à un disque de distribution respectif peuvent être commandés séparément les uns des autres, entre la distribution uniforme de produit dispersible à l'intérieur du champ (I) obtenue par chevauchement des éventails de dispersion (4a, 4b) lors du passage sur les voies de passage sur le terrain (3a, 3b, 3c, 3d) et la distribution de produit dispersible obtenue lors du passage sur au moins une voie de passage de la tournière (3e) placée près du bord du champ (G), des mesures étant prises dans la région de transition entre les voies de passage sur le terrain (3a, 3b, 3c, 3d) et la voie de passage de la tournière (3e), en vue de modifier les réglages en situation de fonctionnement normal de l'épandeur à deux disques (2) par rapport à la quantité de dosage et/ou au point cible et/ou à la vitesse de rotation d'un des disques de distribution respectifs, sachant que pendant la conduite d'une voie de passage sur le terrain (3c) respective vers une voie de passage de la tournière (3e), disposée selon un angle (a) supérieur à 0° et inférieur à 90° par rapport à cette voie de passage sur le terrain (3c), dès lors qu'une distance latérale (S₃) minimale est atteinte, par rapport à la voie de passage sur le terrain (3c) respective, du disque de distribution orienté vers la voie de passage de la tournière (3e) de l'épandeur à deux disques (2), par rapport à la voie de passage de la tournière (3e), l'organe de dosage est déconnecté du disque de distribution orienté vers la voie de passage de la tournière (3e), **caractérisé en ce qu'**en outre :
(a) la quantité de dosage de l'organe de dosage du disque de distribution opposé à la voie de passage de la tournière (3e) est augmentée ; et/ou
(b) le schéma d'épandage du disque de distribution opposé à la voie de passage de la tournière (3e) est modifié au moyen d'au moins une mesure appartenant au groupe suivant :
- modification du point cible du produit dispersible sur le disque de distribution opposé à la voie de passage de la tournière (3e) contre la direction de rotation de ce disque de distribution, de sorte que son schéma d'épandage soit déplacé en direction du disque de distribution orienté vers la voie de passage de la tournière (3e), dont l'organe de dosage est fermé ;
- modification du point cible du produit dispersible sur le disque de distribution opposé à la voie de passage de la tournière (3e) vers l'extérieur en direction de sa périphérie de disque, de sorte que son centre de gravité de distribution s'approche plus près de la région centrale de l'épandeur à deux disques ; et
- augmentation de la vitesse de rotation du disque de distribution opposé à la voie de passage de la tournière (3e), de sorte que son schéma d'épandage soit agrandi dans sa totalité, pour chevaucher davantage le côté, orienté vers la voie de passage de la tournière (3e), de l'autre disque de distribution, dont l'organe de dosage est fermé ;
de sorte que le disque de distribution opposé à la voie de passage de la tournière (3e) effectue la distribution de produit dispersible sur le côté, orienté vers la voie de passage de la tournière (3e), de l'épandeur à deux disques (2), notamment tant que la distance latérale minimale (S₃) n'est pas de nouveau dépassée.

2. Procédé pour la distribution uniforme de produit dispersible à l'aide d'un épandeur à deux disques (2), ledit épandeur comportant deux disques de distribution pouvant tourner en sens opposé de telle sorte que - vus dans la direction d'avancée - le disque de distribution droit tourne dans le sens contraire des aiguilles d'une montre et le disque de distribution gauche tourne dans le sens des aiguilles d'une montre, et dans lequel la caractéristique de dispersion des deux disques de distribution ainsi que respectivement un organe de dosage associé à un disque de distribution respectif peuvent être commandés séparément les uns des autres, entre la distribution uniforme de produit dispersible à l'intérieur du champ (I) obtenue lors du passage sur les voies de passage sur le terrain (3a, 3b, 3c, 3d) par chevauchement des éventails de dispersion (4a, 4b) et la distribution de produit dispersible obtenue lors du passage sur au moins une voie de passage de la tournière (3e) située près du bord du champ (G), des mesures étant prises dans la région de transition entre les voies de passage sur le terrain (3a, 3b, 3c, 3d) et la voie de passage de la tournière (3e), en vue de modifier les réglages en situation de fonctionnement normal de l'épandeur à deux disques (2) par rapport à la quantité de dosage et/ou au point cible et/ou à la vitesse de rotation d'un des disques de distribution respectifs, sachant que pendant la conduite sur une voie de passage sur le terrain (3b) respective en s'éloignant de la voie de passage de la tournière (3e), disposée selon un angle (β) supérieur à 0° et inférieur à 90° par rapport à cette voie de passage sur le terrain (3b), jusqu'à ce que soit atteinte une distance latérale (S₃') minimale, par rapport à la voie de passage sur le terrain (3b) respective, du disque de distribution orienté vers la voie de passage de la tournière (3e) de l'épandeur à deux disques (2), par rapport à la voie de passage de la tournière (3e), l'organe de dosage est déconnecté du disque de distribution orienté vers la voie de passage de la tournière (3e), **caractérisé en ce qu'**en outre :
(a) la quantité de dosage de l'organe de dosage du disque de distribution opposé à la voie de passage de la tournière (3e) est augmentée ; et/ou
(b) le schéma d'épandage du disque de distribution opposé à la voie de passage de la tournière (3e) est modifié au moyen d'au moins une mesure appartenant au groupe suivant :
- modification du point cible du produit dispersible sur le disque de distribution opposé à la voie de passage de la tournière (3e) contre la direction de rotation de ce disque de distribution, de sorte que son schéma d'épandage soit déplacé en direction du disque de distribution orienté vers la voie de passage de la tournière (3e), dont l'organe de dosage est fermé ;
- modification du point cible du produit dispersible sur le disque de distribution opposé à la voie de passage de la tournière (3e) vers l'extérieur en direction de sa périphérie de disque, de sorte que son centre de gravité de distribution s'approche davantage de la région centrale de l'épandeur à deux disques ; et
- augmentation de la vitesse de rotation du disque de distribution opposé à la voie de passage de la tournière (3e) de sorte que son schéma d'épandage soit agrandi dans sa totalité, pour chevaucher davantage le côté, orienté vers la voie de passage de la tournière (3e), de l'autre disque de distribution, dont l'organe de dosage est fermé ;
de sorte que le disque de distribution opposé à la voie de passage de la tournière (3e) effectue la distribution de produit dispersible sur le côté, orienté vers la voie de passage de la tournière (3e), de l'épandeur à deux disques (2), notamment jusqu'à ce que la distance latérale minimale (S₃') soit de nouveau dépassée.

3. Procédé selon la revendication 1 ou 2, **caractérisé en ce que** pendant la conduite :
- vers la voie de passage de la tournière (3e), dès lors qu'est atteinte ; et/ou
- en s'éloignant de la voie de passage de la tournière (3e), jusqu'à ce que soit atteinte la distance latérale minimale (S₃ ; S₃') prévisible du disque de distribution, orienté vers la voie de passage de la tournière (3e), de l'épandeur à deux disques (2), à partir de la voie de passage de la tournière (3e), la quantité de dosage de l'organe de dosage du disque de distribution opposé à la voie de passage de la tournière (3e) est accrue et son schéma d'épandage modifié.

4. Procédé selon l'une quelconque des revendications 1 à 3, **caractérisé en ce que** pour modifier le schéma d'épandage du disque de distribution opposé à la voie de passage de la tournière (3e) pendant la conduite :
- vers la voie de passage de la tournière (3e), dès lors qu'est atteinte ; et/ou
- en s'éloignant de la voie de passage de la tournière (3e), jusqu'à ce que soit atteinte la distance latérale minimale (S₃ ; S₃') prévisible du disque de distribution, orienté vers la voie de passage de la tournière (3e), de l'épandeur à deux disques (2), à partir de la voie de passage de la tournière (3e), au moins le point cible du produit dispersible est modifié sur le disque de distribution opposé à la voie de passage de la tournière (3e) contre la direction de rotation de ce disque de distribution et/ou vers l'extérieur en direction de sa périphérie de disque.

5. Procédé selon l'une quelconque des revendications 1 à 4, **caractérisé en ce que** la distance latérale minimale (S₃ ; S₃') est déterminée en fonction d'au moins une valeur caractéristique des propriétés de vol, pouvant être déterminée par le biais de la technique d'essai, pour le produit dispersible utilisé, la distance latérale minimale (S₃ ; S₃') étant obtenue en un point auquel l'éventail de dispersion (4b) du disque de distribution orienté vers la voie de passage de la tournière (3e) est minimisé par réglage des valeurs limites pour le point cible et/ou pour la vitesse de rotation de ce disque de distribution et chevauche la distribution de produit dispersible de la voie de passage de la tournière (3e), en garantissant une distribution uniforme de produit dispersible.

6. Procédé selon l'une quelconque des revendications 1 à 5, **caractérisé en ce que** la distance latérale minimale (S₃ ; S₃') est obtenue en un point auquel la largeur de travail de l'éventail de dispersion (4b) du disque de distribution orienté vers la voie de passage de la tournière (3e) est minimisée par réglage des valeurs limites du point cible et/ou de la vitesse de rotation de ce disque de distribution, se croisant approximativement avec la largeur de travail (A_{G}) de la distribution de produit dispersible de la voie de passage de la tournière (3e).

7. Procédé selon l'une quelconque des revendications 1 à 5, **caractérisé en ce que** pendant la conduite :
- de la voie de passage sur le terrain (3c) vers la voie de passage de la tournière (3e), dès lors qu'est atteinte une distance latérale (S₁), supérieure à la distance latérale minimale (S₃), du disque de distribution orienté vers la voie de passage de la tournière (3e) de l'épandeur à deux disques (2), à partir de la voie de passage de la tournière (3e) ; et/ou
- sur la voie de passage sur le terrain (3b) en s'éloignant de la voie de passage de la tournière (3e), dès lors qu'est atteinte la distance latérale minimale (S₃) et jusqu'à ce que soit atteinte une distance latérale, supérieure à la distance latérale minimale (S₃'), du disque de distribution orienté vers la voie de passage de la tournière (3e) de l'épandeur à deux disques (2), à partir de la voie de passage de la tournière (3e) ;
lors de la poursuite de la conduite, c'est d'abord :
(a) la quantité de dosage de l'organe de dosage du disque de distribution orienté vers la voie de passage de la tournière (3e) qui est réduite ; et/ou
(b) le schéma d'épandage du disque de distribution orienté vers la voie de passage de la tournière (3e) qui est modifié au moyen d'au moins une mesure appartenant au groupe suivant :
- modification du point cible du produit dispersible sur le disque de distribution orienté vers la voie de passage de la tournière (3e) contre la direction de rotation de ce disque de distribution ;
- modification du point cible du produit dispersible sur le disque de distribution orienté vers la voie de passage de la tournière (3e) vers l'extérieur en direction de sa périphérie de disque ; et
- réduction de la vitesse de rotation du disque de distribution orienté vers la voie de passage de la tournière (3e).

8. Procédé selon la revendication 7, **caractérisé en ce que** la distance latérale (S₁), supérieure à la distance latérale minimale (S₃), du disque de distribution orienté vers la voie de passage de la tournière (3e), à partir de la voie de passage de la tournière (3e) est obtenue en un point auquel la largeur de travail (A_{I}) de l'éventail de dispersion (4b) du disque de distribution orienté vers la voie de passage de la tournière (3e) coupe, en fonctionnement normal, approximativement la largeur de travail (A_{G}) de la distribution de produit dispersible de la voie de passage de la tournière (3e).

9. Procédé selon la revendication 7 ou 8, **caractérisé en ce que** pendant la conduite :
- vers la voie de passage de la tournière (3e), dès lors qu'est atteinte la distance latérale (S₁) supérieure à la distance latérale minimale (S₃), à partir de la voie de passage de la tournière (3e) et/ou
- en s'éloignant de la voie de passage de la tournière (3e), dès lors qu'est atteinte la distance latérale minimale (S₃) et jusqu'à ce que soit atteinte la distance latérale plus importante par rapport à la voie de passage de la tournière (3e) ;
lors de la poursuite de la conduite, la quantité de dosage de l'organe de dosage du disque de distribution orienté vers la voie de passage de la tournière (3e) est diminuée et son schéma d'épandage modifié.

10. Procédé selon l'une quelconque des revendications 7 à 9, **caractérisé en ce que** pour modifier le schéma d'épandage du disque de distribution orienté vers la voie de passage de la tournière (3e), au moins le point cible du produit dispersible sur le disque de distribution orienté vers la voie de passage de la tournière (3e) est modifié contre la direction de rotation de ce disque de distribution et/ou vers l'extérieur en direction de sa périphérie de disque.

11. Procédé selon l'une quelconque des revendications 1 à 10, **caractérisé en ce que** pendant la conduite :
- de la voie de passage sur le terrain (3c) vers la voie de passage de la tournière (3e) ; et/ou
- sur la voie de passage sur le terrain (3b) en s'éloignant de la voie de passage de la tournière ;
la quantité de dosage de l'organe de dosage du disque de distribution opposé à la voie de passage de la tournière (3e), sa vitesse de rotation et son point cible à atteindre avec le produit dispersible :
- reste non modifiée tant que la distance latérale minimale (S₃) du disque de distribution, orienté vers la voie de passage de la tournière (3e), de l'épandeur à deux disques (2) par rapport à la voie de passage de la tournière (3e) n'est pas atteinte ; et/ou
- est réglée en fonctionnement normal dès que la distance latérale minimale (S₃') du disque de distribution, orienté vers la voie de passage de la tournière (3e), de l'épandeur à deux disques (2) par rapport à la voie de passage de la tournière (3e) est de nouveau atteinte.

12. Procédé selon l'une quelconque des revendications 1 à 10, **caractérisé en ce que** pendant la conduite :
- de la voie de passage sur le terrain (3c) vers la voie de passage de la tournière (3e), même avant que soit atteinte la distance latérale minimale (S₃) du disque de distribution orienté vers la voie de passage de la tournière (3e) de l'épandeur à deux disques (2) à partir de la voie de passage de la tournière (3e), notamment lorsque ou après que l'épandeur à deux disques (2) a atteint une position dans laquelle la largeur de travail (A_{I}) de l'éventail de dispersion (4b) du disque de distribution orienté vers la voie de passage de la tournière (3e) coupe en fonctionnement normal la largeur de travail (A_{G}) de la distribution de produit dispersible de la voie de passage de la tournière (3e) ; et/ou
- sur la voie de passage sur le terrain (3b) en partant de la voie de passage de la tournière (3e), après que soit atteinte la distance latérale minimale (S₃') du disque de distribution orienté vers la voie de passage de la tournière (3e) de l'épandeur à deux disques (2) à partir de la voie de passage de la tournière (3e), notamment avant que ou jusqu'à ce que l'épandeur à deux disques (2) ait atteint une position dans laquelle la largeur de travail (A_{I}) de l'éventail de dispersion (4b) du disque de distribution orienté vers la voie de passage de la tournière (3e) coupe en fonctionnement normal la largeur de travail (A_{G}) de la distribution de produit dispersible de la voie de passage de la tournière (3e) ;
(a) la quantité de dosage de l'organe de dosage du disque de distribution opposé à la voie de passage de la tournière (3e) est augmentée ; et/ou
(b) le schéma d'épandage du disque de distribution opposé à la voie de passage de la tournière (3e) est modifié au moyen d'au moins une mesure appartenant au groupe suivant :
- modification du point cible du produit dispersible sur le disque de distribution opposé à la voie de passage de la tournière (3e) contre la direction de rotation de ce disque de distribution ;
- modification du point cible du produit dispersible sur le disque de distribution opposé à la voie de passage de la tournière (3e) vers l'extérieur en direction de sa périphérie de disque ; et
- augmentation de la vitesse de rotation du disque de distribution opposé à la voie de passage de la tournière (3e).

13. Procédé selon l'une quelconque des revendications 1 à 12, **caractérisé en ce que** :
- la modification de quantité de dosage de l'organe de dosage du disque de distribution respectif ; et/ou
- la modification de la vitesse de rotation du disque de distribution respectif ; et/ou
- la modification du point cible du produit dispersible sur le disque de distribution respectif ;
est commandée en continu en fonction de la vitesse d'avancée actuelle de l'épandeur à deux disques (2) le long de la voie de passage sur le terrain (3a, 3b, 3c, 3d) respective ainsi que de la distance latérale actuelle du disque de distribution, orienté vers la voie de passage de la tournière (3e), de l'épandeur à deux disques (2), par rapport à la voie de passage de la tournière (3e).

14. Procédé selon l'une quelconque des revendications 1 à 13, **caractérisé en ce que** la position réelle de l'épandeur à deux disques (2) est déterminée, par exemple par GPS, et que la distance latérale actuelle du disque de distribution, orienté vers la voie de passage de la tournière (3e), de l'épandeur à deux disques (2) est calculée par rapport à la voie de passage de la tournière (3e), la position de la voie de passage de la tournière (3e) et le cas échéant sa largeur de travail (A_{G}) et/ou de dispersion (S_{G}) étant notamment mémorisé dans une carte électronique.

15. Épandeur à deux disques (2) avec deux disques de distribution pouvant tourner en sens opposé de telle sorte que - vus dans la direction d'avancée - le disque de distribution droit tourne dans le sens contraire des aiguilles d'une montre et le disque de distribution gauche tourne dans le sens des aiguilles d'une montre, et avec respectivement un organe de dosage associé à un disque de distribution respectif, la caractéristique de dispersion des deux disques de distribution ainsi que respectivement un organe de dosage associé à un disque de distribution respectif pouvant être commandés séparément les uns des autres à l'aide d'un dispositif de commande, **caractérisé en ce que** le dispositif de commande est réalisé pour réaliser un procédé selon l'une quelconque des revendications précédentes.
